# EUROPÄISCHE PATENTSCHRIFT

(11) **EP 3 792 099 B1**
(45) Veröffentlichungstag und Bekanntmachung des Hinweises auf die Patenterteilung: **26.04.2023**
(21) Anmeldenummer: 20192482.6
(22) Anmeldetag: 24.08.2020
(51) Int. Cl.: B60N 2/01, B60N 2/015, B60N 2/22, B61D 1/04, B61D 33/00, B64D 11/06, B60N 2/24

(54) **SITZANORDNUNG FÜR EIN TRANSPORTMITTEL**
SEATING ASSEMBLY FOR A MEANS OF TRANSPORT
AGENCEMENT DES SIÈGES POUR UN MOYEN DE TRANSPORT

(30) Priorität: 16.09.2019 DE 102019124895; 16.09.2019 DE 102019124897; 16.09.2019 DE 102019124898; 16.09.2019 DE 102019124901; 02.04.2020 DE 102020109182
(43) Veröffentlichungstag der Anmeldung: 17.03.2021
(73) Patentinhaber: GRAMMER AG, 92289 Ursensollen (DE)
(72) Erfinder: Meier, Dominik, 80799 München (DE); Wegmann, Sebastian, 93059 Regensburg (DE)
(74) Vertreter: Hannke, Christian

(56) Entgegenhaltungen:
- CN-A- 105 459 859
- CN-A- 107 028 402
- JP-A- H08 131 295

## Beschreibung

Die Erfindung betrifft eine Sitzanordnung für ein Transportmittel insbesondere für ein Personentransportmittel, wobei die Sitzanordnung mittels einer Befestigungseinrichtung an dem Transportmittel angeordnet ist.

Derartige Transportmittel sind dafür vorgesehen und dafür geeignet, eine Mehrzahl an Personen transportieren zu können und sind beispielsweise Schienenfahrzeuge oder Flugzeuge. Entsprechende Schienenfahrzeuge sind beispielsweise Nah- und/oder Fernverkehrszüge, S-Bahnen, U-Bahnen und Ähnliches.

Es besteht das Bedürfnis den zur Verfügung stehenden Raum in derartigen Transportmitteln möglichst optimal auszunutzen. Dabei sollten möglichst viele reisende Personen in einem Transportmittel aufgenommen werden können. Durch das Vorsehen von klassischen Sitzanordnungen, in welchen der Nutzer in der klassischen Sitzhaltung mit angewinkelten Beinen Platz nimmt, nimmt ein Nutzer vergleichsweise viel Raum in dem Transportmittel ein. Im Vergleich hierzu können durch das Vorsehen von Stehplätzen wesentlich mehr reisende Personen in dem Transportmittel Platz finden. Ein Stehplatz bedeutet jedoch auch einen oftmals nicht akzeptablen Verlust an Reisekomfort, insbesondere auf längeren Reisestrecken.

Ein weiterer Nachteil der bisherigen Sitzanordnungen ist, dass diese nicht hinsichtlich der Bedürfnisse der Nutzer modifizierbar sind. So ist beispielsweise die Ausrichtung der Sitze nicht veränderbar. Eine Anpassung der Ausrichtung beispielsweise an die Fahrtrichtung des Transportmittels ist in der Regel nicht möglich. Ebenso sind in der Regel meist Sitzgruppen vorgesehen, in welchen jeweils zwei Sitzpaare sich gegenüberstehen oder in welchen die Sitzpaare in einer Reihe hintereinander angeordnet sind. Demnach ist eine Anpassung an die Bedürfnisse kleiner Reisegruppen oder Familien durch derartige Sitzgruppen nicht möglich.

JP H08 131295 A zeigt eine Sitzanordnung für ein Transportmittel, insbesondere für ein Personentransportmittel mit einer Befestigungseinrichtung, wobei ein Rahmenelement mit einem oberen Bereich und einem unteren Bereich vorhanden ist.

Aufgabe der vorliegenden Erfindung ist es eine Sitzanordnung bereitzustellen, welche die eingangs genannten Nachteile überwindet. Ferner ist es die Aufgabe der Erfindung eine Inneneinrichtung eines Transportmittels bereitzustellen, welche die eingangs genannten Nachteile überwindet.

Die Aufgabe wird durch die Gegenstände der Ansprüche 1 und 13 gelöst. Vorteilhafte Ausgestaltungen sind den Unteransprüchen zu entnehmen.

Ein wesentlicher Punkt der Erfindung liegt darin, eine Sitzanordnung für ein Transportmittel insbesondere für ein Personentransportmittel bereitzustellen, wobei die Sitzanordnung mittels einer Befestigungseinrichtung an oder in dem Transportmittel anordenbar ist. Die Sitzanordnung umfasst zumindest ein Rahmenelement mit einem oberen Bereich, welcher zur Abstützung des Rückens vorgesehen und geeignet ist und zumindest einen Sitzbereich, welcher in dem zumindest einem Rahmenelement integriert ist.

Es ist zumindest eine Lagerungsachse vorgesehen, mittels welcher das zumindest eine Rahmenelement an der Befestigungseinrichtung angeordnet ist. Es ist lediglich eine Lagerungsachse vorgesehen. Diese Lagerungsachse ist in zumindest einer Aufnahmeeinrichtung der Befestigungseinrichtung aufgenommen. Bevorzugt ist die Lagerungsachse in zwei entlang der Breitenachse (Y, Y`) voneinander beanstandeten Aufnahmeeinrichtungen der Befestigungseinrichtung aufgenommen.

Die zumindest eine Lagerungsachse ermöglicht eine Verschwenkung, beziehungsweise Rotation des zumindest einen Rahmenelements um die Schwenkachse. Vorzugsweise erstreckt sich die Schwenkachse durch, beziehungsweise entlang der Lagerungsachse.

An dem entlang einer Höhenachse (Z`) unteren Ende des zumindest einen Rahmenelements ist ein Durchgangskanal für die Lagerungsachse vorgesehen. Die Lagerungsachse erstreckt sich durch den Durchgangskanal des zumindest einen Rahmenelements. Der Durchgangskanal ist in dem unteren Abschnitt des zumindest einen Rahmenelements vorgesehen. Der Durchgangskanal kann sich vorzugsweise über die gesamte Breite des zumindest einen Rahmenelements erstrecken. Bevorzugt erstreckt sich der Durchgangskanal über einen wesentlichen Abschnitt entlang der Breitenrichtung des zumindest einen Rahmenelements. Ein solcher wesentlicher Abschnitt entspricht bevorzugt zumindest der Hälfte, weiter bevorzugt zumindest drei Viertel der gesamten Breitenerstreckung des zumindest einen Rahmenelements. Es wäre jedoch auch denkbar, dass der Durchgangskanal nicht durchgängig geschlossen ist. Ferner wäre es denkbar, dass der Durchgangskanal zumindest einen, bevorzugt zwei Lagerungsbereiche aufweist, welche durch das zumindest eine Rahmenelement gebildet sind oder an dem zumindest einen Rahmenelement angeordnet sind. Im übrigen Verlauf könnte die Lagerungsachse bevorzugt freigelegt sein.

Die Lagerungsachse ist drehfest, beziehungsweise mechanisch starr mit der Befestigungseinrichtung, beziehungsweise mit der zumindest einen Aufnahmeeinrichtung der Befestigungseinrichtung verbunden. Das zumindest eine Rahmenelement ist verschwenkbar, beziehungsweise rotierbar relativ zu und an der Lagerungsachse angeordnet.

Das zumindest eine Rahmenelement übernimmt demnach die Funktion einer Rückenlehne und gleichermaßen die Funktion eines Sitzteils. Es wird demnach eine äußerst einfache und kostengünstig herzustellende Sitzanordnung bereitgestellt.

Im Folgenden wird für die Sitzanordnung ein Koordinatensystem mit einer Höhenachse (Z) einer Breitenachse (Y) und einer Tiefenachse (X) verwendet. Für das zumindest eine Rahmenelement wird ein Koordinatensystem mit einer Höhenachse (Z`) einer Breitenachse (Y') und einer Tiefenachse (X`) verwendet. Die jeweiligen Achsen können weiterhin jeweils zwei Richtungen aufweisen.

Vorzugsweise ist die Sitzanordnung dafür vorgesehen und geeignet eine Sitzposition in Stehhöhe bereitzustellen Der zumindest eine Sitzbereich ist demnach in einer Höhe angeordnet, welche ein Sitzen oder Anlehnen in Stehhöhe ermöglicht. Derartige Sitzanordnungen werden auch als Stehsitz bezeichnet. Vorteilhafterweise ist der Sitzbereich in einer Höhe zwischen 40 cm und 150 cm, weiter bevorzugt in einer Höhe zwischen 40 cm und 130 cm angeordnet. Die Sitzhöhe kann vorteilhafterweise auf die vorgesehenen Zielpersonen abgestimmt werden. So würde eine Sitzanordnung, welche für Kinder oder ältere Menschen vorgesehen ist, vorzugsweise eine Sitzhöhe in einem Bereich zwischen 40 cm und 60 cm aufweisen. Eine Sitzanordnung für Erwachsene würde eher eine Höhe in einem Bereich zwischen 80 cm und 150 cm, weiter bevorzugt in einem Bereich zwischen 80 cm und 130 cm aufweisen.

Den Passagieren des Transportmittels wird demnach eine äußerst einfache und dennoch bequeme Möglichkeit zum Stehsitzen geboten. Im Gegensatz zum Stehen werden beim Stehsitzen die Beine und der Blutkreislauf entlastet. Hierdurch wird ein gesundes "dynamisches Sitzen" gefördert.

Die erfindungsgemäße Sitzanordnung weist bereits durch die Ausgestaltung mit einem in dem zumindest einen Rahmenelement integrierten Sitzbereich eine im Vergleich zu den gängigen Sitzanordnungen geringere Ausdehnung in einer Tiefenrichtung der Sitzanordnung beziehungsweise des Transportmittels auf. Da das zumindest eine Rahmenelement bereits einen integrierten Sitzbereich umfasst, ist kein zusätzliches Sitzteil notwendig, beziehungsweise vorgesehen. Durch die vorteilhafte Ausgestaltung als Stehsitz nimmt der Insasse der Sitzanordnung keine klassische Sitzhaltung ein. Vielmehr nimmt der Insasse in der Sitzanordnung eine Sitzhaltung ein, welche annähernd einer Stehhaltung entspricht. Diese Sitzhaltung erfordert im Vergleich zur klassischen Sitzhaltung, in welcher die Beine annähernd rechtwinklig angewinkelt sind, einen wesentlich geringeren Raumbedarf. Die erfindungsgemäße Sitzanordnung weist somit eine wesentlich geringere Tiefe als ein herkömmlicher Sitz auf.

Es werden demnach möglichst vielen reisenden Personen Sitzgelegenheiten zur Verfügung gestellt, welche den reisenden Personen auch einen annehmbaren Reisekomfort bereitstellen. Ferner wird der in dem Transportmittel zur Verfügung stehende Raum möglichst optimal ausgenutzt.

Nach einer bevorzugten Ausführungsform wird das zumindest eine Rahmenelement durch einen unteren Abschnitt und einen oberen Abschnitt gebildet. Vorzugsweise weist das zumindest eine Rahmenelement eine Grundfläche auf, welche sich entlang einer Höhenachse (Z`) und entlang einer Breitenachse (Y`) erstreckt. Bevorzugt ist diese Grundfläche als Polygon ausgebildet. Bevorzugt ist die Grundfläche als ein Viereck ausgebildet. Bevorzugt ist die Grundfläche im Wesentlichen als Rechteck oder im Wesentlichen als Trapez ausgebildet.

Der verwendete Ausdruck "im Wesentlichen" soll dahingehend auszulegen sein, dass auch geringfügige Toleranzabweichungen hinsichtlich einer Form einer Länge oder eines Winkels mit beansprucht werden. So kann die Abweichung einen Winkel von bevorzugt kleiner 10°, weiter bevorzugt kleiner 7,5°, noch weiter bevorzugt kleiner 5° betragen. Dies gilt auch für die im Folgenden verwendeten Ausdrücke "im Wesentlichen".

Vorteilhafterweise umfasst der untere Abschnitt zumindest einen sich im Wesentlichen entlang einer Breitenachse (Y') erstreckenden ersten Querabschnitt und einen sich im Wesentlichen entlang einer Breitenachse (Y') erstreckenden zweiten Querabschnitt. Vorzugsweise umfasst der obere Abschnitt einen sich entlang der Breitenachse (Y') erstreckenden dritten Querabschnitt. Bevorzugt weist der erste Querabschnitt und der zweite Querabschnitt eine Erstreckung entlang einer Tiefenachse (X') auf. Vorteilhafterweise ist diese Erstreckung im Vergleich zu einer Erstreckung des dritten Querabschnitts entlang der Tiefenachse vergrößert. Bevorzugt bildet der erste und/oder der zweite Querabschnitt zumindest abschnittsweise den Sitzbereich aus.

Vorzugsweise erstrecken sich der erste und der zweite Querabschnitt entlang der Tiefenachse in entgegengesetzte Richtungen. Vorzugsweise sind der erste und der zweite Querabschnitt miteinander verbunden. Bevorzugt sind der erste und der zweite Querabschnitt einstückig oder einteilig ausgebildet. Vorteilhafterweise sind der erste und der zweite Querabschnitt entlang der Höhenachse (Z`) von dem dritten Querabschnitt beabstandet und mittels zweier Strebenelemente verbunden. Vorzugsweise weisen der erste Querabschnitt und der zweite Querabschnitt eine größere Erstreckung entlang einer Tiefenachse (X`) auf als der dritte Querabschnitt.

Es ist von Vorteil, dass der untere Abschnitt und der obere Abschnitt eine Innenfläche einschließen. Ebenso schließen der erste und der zweite Querabschnitt, die beiden Strebenelemente und der dritte Querabschnitt die Innenfläche ein. Somit ist das zumindest eine Rahmenelement im Wesentlichen plattenartig ausgebildet, wobei am entlang der Höhenachse unteren Ende der erste und der zweite Querabschnitt mit einer vergrößerten Tiefenerstreckung vorgesehen sind, wodurch der Sitzbereich zumindest abschnittsweise ausgebildet wird.

Nach einer weiteren besonders bevorzugten Ausführungsform ist das zumindest eine Rahmenelement um eine sich entlang einer Breitenachse (Y`, Y) erstreckende Schwenkachse relativ zu der Befestigungseinrichtung verschwenkbar. Das zumindest eine Rahmenelement ist als Ganzes bezüglich einer Schwenkachse verschwenkbar. Somit werden sowohl der obere Bereich zur Abstützung des Rückens als auch der integrierte Sitzbereich gleichzeitig um die Schwenkachse verschwenkt, beziehungsweise rotiert. Im Gegensatz dazu ist bei herkömmlichen Sitzanordnungen lediglich die Rückenlehne um eine Schwenkachse schwenkbar.

Nach einer weiteren bevorzugten Ausführungsform ist das zumindest eine Rahmenelement in zumindest zwei Schwenkpositionen schwenkbar. Bevorzugt ist das zumindest eine Rahmenelement in drei Schwenkpositionen schwenkbar. Bevorzugt ist das zumindest eine Rahmenelement in eine erste Schwenkposition schwenkbar. Vorzugsweise erstreckt sich das Rahmenelement in der ersten Schwenkposition im Wesentlichen senkrecht zu einer fiktiven Ebene, welche sich parallel zu dem Boden des Transportmittels erstreckt. Vorteilhafterweise ist das zumindest eine Rahmenelement in eine zweite Schwenkposition schwenkbar, welche relativ zu der ersten Schwenkposition um einen Neigungswinkel (α) geneigt ist. Bevorzugt ist das zumindest eine Rahmenelement in eine dritte Schwenkposition schwenkbar, welche relativ zu der ersten Schwenkposition um einen Neigungswinkel (β) geneigt ist.

Vorteilhafterweise kann eine zweite fiktive Ebene definiert werden, welche senkrecht zur ersten fiktiven Ebene verläuft. Vorteilhafterweise ist das zumindest eine Rahmenelement in der ersten Schwenkposition im Wesentlichen in der zweiten fiktiven Ebene angeordnet. In der zweiten und der dritten Schwenkposition schließt das zumindest eine Rahmenelement vorzugsweise jeweils einen Neigungswinkel α beziehungsweise β mit der zweiten fiktiven Ebene ein.

Dabei ist es von Vorteil, dass das zumindest eine Rahmenelement in der zweiten und der dritten Schwenkposition in entlang einer Tiefenachse (X) entgegengesetzten Richtungen geneigt ist. Vorteilhafterweise weisen der Neigungswinkel (α) und der Neigungswinkel (β) somit ein unterschiedliches Vorzeichen (±) auf. Bevorzugt weisen der Neigungswinkel (α) und der Neigungswinkel (β) jedoch den gleichen Betrag auf. Vorzugsweise liegen die Neigungswinkel (α, β) in einem Bereich zwischen 10° und 80°, weiter bevorzugt in einem Bereich zwischen 20° und 70°, wobei das zumindest eine Rahmenelement und die zweite fiktive Ebene die Neigungswinkel (α, β) einschließen.

Nach einer weiteren bevorzugten Ausführungsform ist eine Arretierungsvorrichtung vorgesehen, mittels welcher das zumindest eine Rahmenelement in zumindest einer Schwenkposition arretierbar ist. Bevorzugt ist das zumindest eine Rahmenelement mittels der Arretierungsvorrichtung in zumindest zwei oder zumindest drei Schwenkpositionen arretierbar. Vorteilhafterweise ist das zumindest eine Rahmenelement mittels der Arretierungsvorrichtung in allen vorgesehenen Schwenkpositionen arretierbar.

Wird das zumindest eine Rahmenelement in die erste Schwenkposition verschwenkt und in diese Schwenkposition arretiert, ist es aufrecht ausgerichtet und in Wesentlichen in der zweiten fiktiven Ebene angeordnet, welche senkrecht zur ersten fiktiven Ebene verläuft. In dieser Position ist die Sitzanordnung nicht durch einen Nutzer belegt. Die effektive Tiefe der Sitzanordnung in dieser Position entspricht im Wesentlichen der Summe der Tiefenerstreckungen des ersten und zweiten Querabschnitts des zumindest eine Rahmenelements. Die Sitzanordnung nimmt demnach in der ersten Schwenkposition entlang der Tiefenachse einen minimalen Raum ein. Dadurch dass bei der aufrechten Erstreckung des zumindest eine Rahmenelements äußerst wenig Raumbedarf eingenommen wird, ist beispielsweise eine effektive Lagerung der Sitzanordnung ermöglicht. Ferner kann bei mehreren in einer Reihe angeordneten Sitzanordnungen der Zwischenraum durch ein Verschwenken in die erste Schwenkposition vergrößert werden.

Nach einer weiteren vorteilhaften Ausführungsform wird in der zweiten Schwenkposition des zumindest einen Rahmenelements ein erster Sitzbereich zumindest durch den ersten Querabschnitt gebildet. Vorzugsweise wird in der dritten Schwenkposition des zumindest einen Rahmenelements ein zweiter Sitzbereich zumindest durch den zweiten Querabschnitt gebildet.

Vorteilhafterweise ist das zumindest eine Rahmenelement in die erste Schwenkposition, in die zweite Schwenkposition und in die dritte Schwenkposition verschwenkbar und vorteilhafterweise in diesen Schwenkpositionen arretierbar. Durch die bevorzugte Erstreckung des ersten Querabschnitts und des zweiten Querabschnitts in entlang der Tiefenachse (X) entgegengesetzte Richtungen und durch die entgegengesetzten Neigungswinkel (α, β) des zumindest einen Rahmenelements in der zweiten und der dritten Schwenkposition sind der erste und der zweite Sitzbereich in entlang der Tiefenachse (X) entgegengesetzte Richtungen ausgerichtet. Durch eine solche Ausgestaltung kann eine äußerst einfache Anpassung der Sitzausrichtung an die Fahrtrichtung erfolgen. Bei einigen Transportmitteln, wie beispielsweise Schienenfahrzeugen kann während der Fahrt ein Richtungswechsel erfolgen. Dies kann beispielsweise bei der Einfahrt, beziehungsweise Ausfahrt in oder aus einem Kopfbahnhof erfolgen. Manche Nutzer reagieren auf eine Rückwärtsfahrt jedoch mit Unbehagen. Durch ein einfaches Umschwenken von beispielsweise der zweiten in die dritte Schwenkposition kann die Ausrichtung der Sitzanordnung auf eine einfache Art und Weise der Fahrtrichtung angepasst werden.

Nach einer weiteren bevorzugten Ausführungsform ist das zumindest eine Rahmenelement in die erste Schwenkposition und in die zweite Schwenkposition verschwenkbar und vorteilhafterweise in diesen Schwenkpositionen arretierbar. Ebenfalls denkbar wäre eine Ausführungsform, in welcher das zumindest eine Rahmenelement in die erste Schwenkposition und in die dritte Schwenkposition verschwenkbar ist und vorteilhafterweise in diesen Schwenkpositionen arretierbar ist. Nach diesen Ausführungsformen würde die Sitzanordnung also für lediglich eine Sitzrichtung weiterhin eine aufrechte Schwenkposition ausgestaltet sein.

Nach einer weiteren bevorzugten Ausführungsform ist das zumindest eine Rahmenelement in die zweite Schwenkposition und in die dritte Schwenkposition verschwenkbar und vorteilhafterweise in diesen Schwenkpositionen arretierbar. Nach dieser Ausführungsform würde die Sitzanordnungen für zwei entgegengesetzte Sitzrichtungen ausgestaltet sein. Es wäre jedoch keine aufrechte Schwenkposition zur Lagerung vorgesehen.

Schließlich wäre es denkbar, dass das zumindest eine Rahmenelement lediglich die zweite Schwenkposition oder die dritte Schwenkposition einnehmen kann und in dieser Schwenkposition fest arretiert, beziehungsweise fixiert ist.

Selbstverständlich wäre es auch denkbar, dass das zumindest eine Rahmenelement in weitere Schwenkpositionen verschwenkbar ist und in diesen Schwenkpositionen arretierbar ist. Derartige weitere Schwenkpositionen könnten zwischen der ersten Schwenkposition und der zweiten Schwenkposition oder zwischen der ersten Schwenkposition und der dritten Schwenkposition liegen. Die entsprechenden Neigungswinkel wären dann kleiner als die Neigungswinkel (α, β). Hierdurch könnte der Insasse die Neigung des oberen Abschnitts zur Abstützung des Rückens entsprechend seinen Bedürfnissen einstellen.

Nach einer weiteren vorteilhaften Ausführungsform erstreckt sich in der zweiten Schwenkposition des zumindest einen Rahmenelements der erste Sitzbereich sich im Wesentlichen parallel zu der ersten fiktiven Ebene, beziehungsweise horizontal. Vorzugsweise erstreckt sich in der dritten Schwenkposition des zumindest einen Rahmenelements der zweite Sitzbereich im Wesentlichen parallel zu der ersten fiktiven Ebene, beziehungsweise horizontal. Vorzugsweise umfasst der erste Querabschnitt eine obere Fläche, welche in der zweiten Schwenkposition sich im Wesentlichen parallel zu der ersten fiktiven Ebene erstreckt. Vorteilhafterweise umfasst der zweite Querabschnitt eine obere Fläche, welche sich in der dritten Schwenkposition im Wesentlichen parallel zu der ersten fiktiven Ebene erstreckt.

Nach einer weiteren vorteilhaften Ausführungsform ist zumindest ein Zusatzelement vorgesehen, welches an dem unteren Abschnitt des zumindest einen Rahmenelements angeordnet ist. Vorteilhafterweise wird durch das zumindest eine Zusatzelement die Tiefenerstreckung des Sitzbereichs, beziehungsweise des unteren Abschnitts, beziehungsweise des ersten oder zweiten Querabschnitts vergrößert. Das Zusatzelement kann auf den oberen Flächen des ersten und/oder zweiten Querabschnitts angeordnet sein oder anliegend an den oberen Flächen des ersten und/oder zweiten Querabschnitts angeordnet sein. Vorteilhafterweise ist das Zusatzelement mittels einer kraft und/oder formschlüssigen Verbindung mit dem zumindest einen Rahmenelement verbunden. Dies kann beispielsweise eine Clipsverbindung, eine Schraubverbindung, eine Nut-Feder-Verbindung oder eine weitere derartige Verbindung sein.

Es kann somit eine effektive Sitzfläche definiert werden, welche mit dem Nutzer in Kontakt tritt. Die effektive Sitzfläche umfasst vorteilhafterweise den ersten oder zweiten Sitzbereich und ist bevorzugt im Wesentlichen horizontal, beziehungsweise parallel zu der ersten fiktiven Ebene orientiert. Diese effektive Sitzfläche wird je nach Schwenkposition durch den ersten oder zweiten Sitzbereich zur Verfügung gestellt. Die effektive Sitzfläche kann zumindest abschnittsweise durch die obere Fläche des ersten Querabschnitts oder die obere Fläche des zweiten Querabschnitts bereitgestellt werden. Denkbar wäre es jedoch auch, dass auf den oberen Flächen der Querabschnitte noch weitere Elemente, weitere Schichten, Bezüge, Polsterungen etc. angeordnet sind, welche dann zumindest abschnittsweise die effektive Sitzfläche bilden. Vorteilhafterweise kann ein Zusatzelement die effektive Sitzfläche vergrößern. Vorzugsweise kann die effektive Sitzfläche zumindest abschnittsweise durch das Zusatzelement gebildet werden. Denkbar wäre es jedoch auch, dass weitere Schichten, Bezüge, Polsterungen etc. auf dem Zusatzelement angeordnet sind, welche dann zumindest abschnittsweise die effektive Sitzfläche bilden.

Der erste und der zweite Sitzbereich des zumindest einen Rahmenelements haben vorzugsweise eine Erstreckung entlang einer Tiefenachse (X`), welche zwischen 10 cm und 50 cm, weiter bevorzugt zwischen 15 cm und 40 cm liegt.

Nach einer weiteren besonders bevorzugten Ausführungsform ist an oder in dem zumindest einen Rahmenelement ein Sitzbezug angeordnet. Das zumindest eine Rahmenelement schließt vorzugsweise eine Innenfläche ein. Der Sitzbezug ist demnach vorteilhafterweise in dieser Innenfläche angeordnet. Alternativ ist es bevorzugt, wenn der Sitzbezug auf oder über der Innenfläche angeordnet ist. Denkbar wäre auch, dass der Sitzbezug die Innenfläche zumindest abschnittsweise umschließt. Vorteilhafterweise ist der Sitzbezug dazu vorgesehen und bestimmt der durch den Nutzer eingebrachten Kraft standzuhalten. Der Sitzbezug weist demnach vorteilhafterweise eine entsprechende Stabilität auf. Demnach sind vorteilhafterweise keine weiteren abstützenden Elemente in der Innenfläche angeordnet.

Vorteilhafterweise weist der Sitzbezug zumindest zwei Bereiche auf, welche unterschiedliche Elastizitäten aufweisen. Vorteilhafterweise weist ein erster Bereich eine geringere Elastizität auf als der zweite Bereich. Vorteilhafterweise ist der zweite Bereich durch eine Krafteinwirkung elastisch verformbar. Vorzugsweise ist der erste Bereich entlang der Höhenachse (Z`) über dem zweiten Bereich angeordnet. Demnach ist der zweite Bereich in einem entlang der Höhenachse (Z`) mittleren und/oder unteren Abschnitt der Innenfläche des zumindest einen Rahmenelements angeordnet. Denkbar wäre jedoch auch eine Ausführungsform, in welcher der zweite Bereich mit einer höheren Elastizität in einem seitlichen Bereich der Innenfläche angeordnet ist. Der Sitzbezug ist vorzugsweise randseitig von unten nach oben mit dem zumindest einen Rahmenelement verbunden oder mit diesem fest verbunden. Vorzugsweise ist durch eine entsprechende Krafteinwirkung oder Belastung der Sitzbezug in dem zweiten, unteren, mittleren Bereich verformbar. Ein solche Belastung entsteht beispielsweise durch das Anlehnen des Insassen an, beziehungsweise in den Sitzbezug. Eine solche Verformung kann vorteilhafterweise als eine dreidimensionale Verformung oder als eine Auswölbung beschrieben werden.

Vorteilhafterweise ist der Sitzbezug derart ausgestaltet, dass die in dem zweiten Bereich ausgeformte Auswölbung bei einem Schwenken von der zweiten in die dritte Schwenkposition entsprechend angepasst wird und somit in die jeweilig entgegengesetzte Richtung sich erstreckt.

Vorteilhafterweise umfasst eine effektive Sitzfläche den ersten oder zweiten Sitzbereich des zumindest einen Rahmenelements und einen Abschnitt des zweiten Bereichs des Sitzbezugs.

Der vorteilhafte zweite Bereich des Sitzbezugs ist demnach dazu geeignet und dafür vorgesehen, dass der untere Rücken und die Glutealregion des Insassen abgestützt werden. Durch die erhöhte Elastizität kann der Sitzbezug in seinem zweiten unteren Bereich bei Belastung gedehnt werden, wodurch eine entsprechende Auswölbung des Sitzbezugs entsteht. Eine solche Auswölbung dient vorteilhafterweise ebenso als Sitzfläche als auch als Abstützung der Glutealregion und des unteren Rückens des Nutzers.

Vorteilhafterweise weist der erste obere Bereich eine geringere Elastizität auf und ist demnach starrer, beziehungsweise fester. Dieser Bereich dient vorteilhafterweise zur Abstützung des Schulterbereichs des Nutzers.

Nach einer weiteren vorteilhaften Ausgestaltung weist der Sitzbezug einen dritten Bereich auf, welcher entlang der Höhenachse (Z`) unterhalb des zweiten Bereichs angeordnet ist.

Vorzugsweise ist dieser dritte Bereich mit dem zumindest einen Rahmenelement verbunden. Bevorzugt ist dieser dritte Bereich mit dem ersten und/oder zweiten Querabschnitt des zumindest einen Rahmenelements verbunden. Dabei ist es von Vorteil, dass diese Verbindung eine lösbare Verbindung ist. Eine solche Verbindung könnte beispielsweise eine Klemmverbindung, eine Steckverbindung oder eine Verbindung mittels eines Einhakens sein. Denkbar wäre auch, dass das oben beschriebene Zusatzelement zur Verbindung des dritten Bereichs des Sitzbezugs mit dem zumindest einen Rahmenelement dient. Beispielsweise könnte der dritte Bereich des Sitzbezugs zwischen dem zumindest einen Rahmenelement und dem Zusatzelement eingeklemmt werden.

Nach einem weiteren Gedanken der Erfindung kann der dritte Bereich des Sitzbezugs als Polsterung des ersten und/oder zweiten Sitzbereichs dienen. Hierzu kann in dem dritten Bereich mehr Material des Sitzbezugs eingebracht worden sein, so dass der dritte Bereich eine vergrößerte Dicke aufweist. Alternativ oder kumulativ könnte der dritte Bereich mit einem zusätzlichen Material gefüttert sein, welches gute Polsterungseigenschaften aufweist. Ein solches Material könnte auch außen auf dem dritten Bereich aufgebracht worden sein. Der dritte Bereich des Sitzbezugs ist somit vorteilhafterweise auf dem ersten und/oder dem zweiten Sitzbereich des zumindest einen Rahmenelements und gegebenenfalls auf dem Zusatzelement angeordnet.

Nach einer weiteren vorteilhaften Ausgestaltung geht der zweite Bereich in den dritten Bereich ohne Unterbrechung über. Vorteilhafterweise umfasst die effektive Sitzfläche demnach ebenso den Übergang zwischen dem dritten und dem zweiten Bereich. Wie bereits beschrieben, kann die effektive Sitzfläche auch einen Abschnitt des zweiten Bereichs des Sitzbezugs umfassen.

Nach einer weiteren vorteilhaften Ausführungsform ist zwischen dem zweiten Bereich und dem dritten Bereich eine Aussparung vorgesehen. Vorzugsweise erstreckt sich die Aussparung über die im Wesentlichen gesamte Breite der Innenfläche. Der zweite und der dritte Bereich des Sitzbezugs sind demnach vorzugsweise lediglich über stegartige Abschnitte verbunden, welche an den Längsabschnitten des zumindest einen Rahmenelements angeordnet sind.

Denkbar wäre auch, dass der Sitzbezug nicht mit dem ersten Querabschnitt verbunden ist. Der Sitzbezug würde somit keinen dritten Bereich aufweisen.

Nach einer weiteren bevorzugten Ausführungsform ist der Sitzbezug ein gestrickter Sitzbezug, beziehungsweise ein Gestrick. Ein solches Gestrick ist vorteilhafterweise mit einer Strickmaschine hergestellt. Diese vorteilhafte Verwendung eines Gestricks erlaubt eine hohe Variabilität bei der Ausgestaltung der Bereiche mit unterschiedlichen Elastizitäten. Solche Gestricke, welche sowohl flexible als auch starre, beziehungsweise feste Abschnitte aufweisen, können im Vergleich zu Webstoffen sehr einfach und kostengünstig hergestellt werden.

Vorteilhafterweise ist das Gestrick mit einem 3D-Strickverfahren hergestellt. Durch eine solche vorteilhafte Technik können innerhalb eines Strickteils sowohl flexible als auch starre Bereiche eingearbeitet werden. Vorzugsweise können durch ein solches Strickverfahren neben verschiedenen Dehnungen, unterschiedliche Komfortzonen, Muster und Farben äußerst einfach eingearbeitet werden. Das Verfahren erlaubt eine Vielzahl an Strickbezügen in einem Durchlauf ohne Absetzen herstellen zu können. Ein solcher vorteilhafter Sitzbezug kann sich ergonomisch und individuell dem Körper anpassen. Die Fertigung kann möglichst einfach erfolgen, da nur diejenigen Materialen verarbeitet werden müssen, welche für den Sitzbezug notwendig sind. Zusätzliche Polsterelemente sind nicht mehr notwendig. Vorteilhafte Materialien, aus welchen der Sitzbezug hergestellt ist, sind beispielsweise Polyester, Polyamid, Tencel oder auch Wolle. Selbstverständlich kommen noch weitere Materialien in Betracht, welche allein oder in Kombination mit anderen Materialien für ein Strickverfahren geeignet sind.

Vorteilhafterweise weist das Gestrick integrierte Verstärkungsfasern auf, die ohne Ondulation höchste mechanische Zugkräfte aufnehmen können. Vorzugsweise werden die Verstärkungsfäden in 0- und 90°- Richtung durch Maschenfäden so umschlungen, dass keine Verletzungen der Verstärkungsfasern entstehen. Derartige Gestricke mit biaxialen Verstärkungen können als Schlauchgestrick oder als Flachgestrick hergestellt werden. Vorzugsweise bestehen die Verstärkungsfäden aus Glas, Carbon, Basalt oder Aramid. Der Maschenfaden besteht vorzugsweise aus Polyester, Polypropylen oder Polyamid.

Nach einer weiteren vorteilhaften Ausführungsform ist der Sitzbezug schlauchartig ausgestaltet. Vorzugsweise ist der Sitzbezug ein Schlauchgestrick. Der schlauchartige Sitzbezug kann vorteilhafterweise über das zumindest eine Rahmenelement gezogen werden und ist somit bevorzugt beidseitig über der Innenfläche des zumindest einen Rahmenelements angeordnet. Der schlauchartige Sitzbezug weist zwei Öffnungsseiten auf. Eine erste Öffnungsseite ist entlang der Höhenachse (Z`) über der zweiten Öffnungsseite angeordnet. Die erste Öffnungsseite ist vorteilhafterweise geschlossen. Dies kann beispielsweise durch ein Vernähen erfolgen. Die geschlossene erste Öffnungsseite liegt vorzugsweise an dem oberen Abschnitt, beziehungsweise dem dritten Querabschnitt des zumindest einen Rahmenelements an. Nach dem Überziehen des Schlauchgestricks über das zumindest eine Rahmenelement kann auch die zweite Öffnungsseite verschlossen werden. Dies könnte ein wieder öffenbarer Verschluss, beispielsweise ein Reißverschluss, Druckknöpfe oder Ähnliches sein. Hierdurch wird es ermöglicht, den Sitzbezug bei Bedarf auswechseln oder reinigen zu können. Die zweite Öffnungsseite könnte vorzugsweise ebenso in dem dritten Bereich des Sitzbezugs enthalten sein.

Nach einer weiteren vorteilhaften Ausführungsform ist der Sitzbezug an der Innenseite des zumindest einen Rahmenelements befestigt. Ein solcher Sitzbezug kann vorzugsweise ein Flachgestrick sein. Vorteilhafterweise ist der Sitzbezug an der Innenseite der Strebenelemente und dem dritten Querabschnitt befestigt. Hierzu kann beispielsweise eine Kederschiene an der Innenseite des zumindest einen Rahmenelements angeordnet sein. Diese Kederschiene ist somit der Innenfläche des zumindest einen Rahmenelements zugewandt. Der Sitzbezug weist demnach vorzugsweise eine Kederfahne auf, welche in der Kederschiene angeordnet, beziehungsweise eingespannt wird.

Nach einer weiteren bevorzugten Ausführungsform bilden der untere Abschnitt und der obere Abschnitt des zumindest einen Rahmenelements das zumindest einen Rahmenelement einteilig, einstückig oder mehrteilig insbesondere zweiteilig aus. Bei einer einteiligen Ausgestaltung ist das Rahmenelement, beziehungsweise der obere und der untere Abschnitt als einziges und einheitliches Teil, beziehungsweise als ein sogenannter Monoblock hergestellt. Vorteilhafterweise sind die jeweiligen Abschnitte dabei aus dem gleichen Material gefertigt. Unter einer einstückigen Ausgestaltung ist hierbei zu verstehen, dass sämtliche Abschnitte zwar nicht aus einem einzigen und einheitlichen Teil gefertigt werden, jedoch nicht nur fest, sondern so innig miteinander verbunden sind, dass sie nicht als mehrere aneinander gefügte Bauteile erscheinen und jedenfalls nicht mehr voneinander gelöst werden können, ohne dass dabei diese dabei zerstört werden.

Bei einer Verwendung des vorteilhaften schlauchförmigen Sitzbezugs kann das zumindest eine Rahmenelement einteilig oder einstückig ausgestaltet sein. Der schlauchförmige Sitzbezug wird demnach bevorzugt über das zumindest eine Rahmenelement geführt. Eine einteilige Ausgestaltung hat den Vorteil, dass das zumindest eine Rahmenelement eine erhöhte Stabilität und Steifigkeit aufweist. Ferner müssen keine zusätzlichen Verbindungsmöglichkeiten bereitgestellt werden wie Bohrungen, Steckverbindungen, Schrauben etc.

Bei der vorteilhaften mehrteiligen Ausgestaltung des zumindest einen Rahmenelements besteht das zumindest eine Rahmenelement aus mehreren Teilen, welche miteinander vorzugsweise lösbar verbunden sind. Vorteilhafterweise ist das zumindest eine Rahmenelement zweiteilig ausgestaltet und besteht aus dem oberen Abschnitt und dem unteren Abschnitt. Dabei ist es von Vorteil, dass die beiden Abschnitte U-förmig ausgestaltet sind. Hierzu sind vorteilhafterweise die Strebenelemente unterbrochen und mit einer lösbaren Verbindung ausgestattet. Eine solche lösbare Verbindung ist beispielsweise eine Steckverbindung. Vorzugsweise werden jeweils zwei Abschnitte des Strebenelements ineinandergesteckt. Vorteilhafterweise sind noch Sicherungseinrichtungen, wie beispielsweise Stifte, Schrauben, Bolzen usw. vorgesehen, mittels welchen die Steckverbindung gegen ein unbeabsichtigtes Lösen gesichert werden kann. Eine solche Ausgestaltung ist besonders vorteilhaft, wenn ein Sitzbezug an einer zur Innenfläche hinweisenden inneren Seite des zumindest einen Rahmenelements angeordnet werden soll. Hierzu kann wie bereits beschrieben, eine Kederschiene an der Innenseite des zumindest einen Rahmenelements angeordnet sein. In eine solche Kederschiene kann dann eine Kederfahne des Sitzbezugs eingebracht werden. Dieses Einbringen kann besonders einfach erfolgen, wenn das zumindest eine Rahmenelement aufgetrennt werden kann, beziehungsweise mehrteilig ausgestaltet ist.

Denkbar wäre auch, dass die Lagerungsachse drehfest, beziehungsweise mechanisch starr mit dem zumindest einem Rahmenelement verbunden ist. Dabei ist es von Vorteil, dass die Lagerungsachse rotierbar in der zumindest einen, vorzugsweise zwei Aufnahmeeinrichtung(en) gelagert ist. Das zumindest eine Rahmenelement und die Lagerungsachse verschwenken, beziehungsweise rotieren dann bevorzugt relativ zu dem zumindest einen vorzugsweise zwei Aufnahmeeinrichtung(en).

Denkbar wäre auch, dass zwei Lagerungsachsen vorgesehen sind, welche am unteren Abschnitt des zumindest einen Rahmenelements an den jeweiligen entlang der Breitenachse (Y, Y`) gegenüberliegenden Seiten derart angeordnet sind, dass diese entlang der Breitenachse (Y, Y`) über das zumindest eine Rahmenelement hinausragen. Die beiden Lagerungsachsen sind dann rotierbar in je einer Aufnahmeeinrichtung der Befestigungseinrichtung gelagert.

Vorteilhafterweise ist zumindest ein Rahmenelement zwischen zwei Aufnahmeeinrichtungen der Befestigungseinrichtung angeordnet.

Nach einer weiteren bevorzugten Ausführungsform ist an dem zumindest einem Rahmenelement zumindest ein Griffelement vorgesehen. Vorzugsweise ist das zumindest eine Griffelement an einem der Strebenelemente in einem entlang der Höhenachse oberen Bereich angeordnet. Demnach ist das Griffelement ganz oder zumindest abschnittsweise an dem oberen Abschnitt des zumindest einen Rahmenelements angeordnet. Die Sitzanordnung weist dabei vorteilhafterweise eine erste Außenseite und eine zweite Außenseite auf. Vorteilhafterweise ist das Griffelement an einer Außenseite angeordnet, welche in einem in dem Transportmittel eingebauten Zustand an einem Durchgang liegt. Die Griffelemente bilden somit eine Haltemöglichkeit für stehende Passagiere oder vorbeigehende Passagiere. Denkbar wäre, dass nur die erste Außenseite an einem Durchgang des Transportmittels liegt. In diesem Fall ist es von Vorteil, wenn das Griffelement an der ersten Außenseite des Sitzanordnung angeordnet ist. Es wäre jedoch auch denkbar, dass an der ersten und an der zweiten Außenseite der Sitzanordnung ein Griffelement angeordnet ist. Dies wäre beispielsweise von Vorteil, wenn in dem Transportmittel zwei Durchgänge vorgesehen sind. Die Anordnung der Griffelemente ist jedoch nicht auf die Anordnung bezüglich der Durchgänge beschränkt. Derartige Griffelemente können auch andere Funktionen, wie beispielsweise eine Unterstützung beim Aufstehen etc. aufweisen.

Nach einer weiteren bevorzugten Ausführungsform umfasst die Sitzanordnung lediglich ein Rahmenelement, welches an der Befestigungseinrichtung angeordnet ist. Vorteilhafterweise ist das Rahmenelement zwischen zwei Aufnahmeeinrichtungen der Befestigungseinrichtung angeordnet. Vorzugsweise umfasst die Befestigungseinrichtung zwei Armelemente, welche in einem Basiselement münden, wobei an jedem Armelement eine Aufnahmeeinrichtung für die Lagerungsachse angeordnet ist. Das jeweilige Armelement und die Aufnahmeeinrichtung sind vorteilhafterweise einteilig oder einstückig ausgestaltet. Vorzugsweise ist das Basiselement mittig zu, und entlang der Höhenachse (Z) unter, dem Rahmenelement angeordnet. Die Armelemente sind entlang der Höhenachse (Z) nach unten zusammenlaufend ausgestaltet. Vorzugsweise sind die Armelemente im Wesentlichen V-förmig ausgestaltet. Es kann somit eine vorteilhafte symmetrische Krafteinleitung in das Basiselement erfolgen. Durch eine derartige Ausgestaltung kann die Sitzordnung äußerst einfach gestaltet werden. Die Befestigungseinrichtung greift direkt an der Lagerungsachse für das Rahmenelement an. Es erübrigen sich somit jegliche zusätzliche Bauelemente zur Lagerung des Rahmenelements.

Das Basiselement kann vorteilhafterweise direkt an dem Boden des Transportmittels fixiert werden. Denkbar wäre auch, dass die Befestigungseinrichtung, beziehungsweise das Basiselement mittels eines Führungssystems an dem Boden des Transportmittels verlagerbar angeordnet ist. Ein solches Führungssystem kann beispielsweise ein Schienensystem sein. Durch das vorteilhafte Zusammenlaufen der Armelemente ist das Basiselement mittig unterhalb des Rahmenelements angeordnet. Es kann somit eine vorteilhafte symmetrische Krafteinleitung in dieses Basiselement erfolgen. Dies hat den Vorteil, dass das Führungssystem wesentlich einfacher gestaltet werden kann. So kann beispielsweise nur eine Schiene vorgesehen werden, auf welcher die Sitzanordnung verlagerbar angeordnet werden kann. Ferner ist es von Vorteil, dass eine Arretierungseinrichtung vorgesehen ist, mittels welcher die Sitzanordnung an der gewünschten Position im Innenraum des Transportmittels arretierbar ist.

Nach einer weiteren bevorzugten Ausführungsform umfasst die Sitzanordnung zwei Rahmenelemente, welche an der Befestigungseinrichtung angeordnet sind. Bevorzugt sind die beiden Rahmenelemente entlang der Breitenachse (Y) nebeneinander angeordnet. Die beiden Rahmenelement könne gleichartig oder auch unterschiedlich ausgebildet sein. Jedes der beiden Rahmenelemente kann Merkmale nach den eingangs beschriebenen Ausführungsformen unabhängig voneinander aufweisen.

Wie bereits beschrieben, können bevorzugt eine erste und eine zweite Außenseite der Sitzanordnung definiert werden. Umfasst die Sitzanordnung zwei Rahmenelemente, wird je eine Außenseite der Sitzanordnung von einem der beiden Rahmenelemente dargestellt. Das bereits beschriebene zumindest eine Griffelement kann dabei an einer der beiden Außenseiten angeordnet sein. Vorteilhafterweise liegt in einem eingebauten Zustand die Außenseite mit dem Griffelement an einem Durchgang des Transportmittels. Denkbar wäre natürlich auch an beiden Außenseiten und somit an beiden Rahmenelementen zumindest ein Griffelement anzuordnen. Dies ist beispielsweise von Vorteil, wenn in einem eingebauten Zustand die beiden Außenseiten zu einem Durchgang des Transportmittels weisen. Denkbar wäre natürlich auch, dass an den beiden innenliegenden Seiten der Rahmenelemente zumindest ein Griffelement angeordnet ist. Diese könnten bevorzugt zusätzlich zu den an den Außenseiten liegenden Griffelementen vorgesehen sein.

Vorteilhafterweise sind die beiden Rahmenelemente unabhängig voneinander um eine gemeinsame sich entlang einer Breitenachse (Y) erstreckende Schwenkachse relativ zu der Befestigungseinrichtung verschwenkbar. Die beiden Rahmenelemente sind bevorzugt, wie bereits beschrieben, unabhängig voneinander um die Neigungswinkel (α, β) in die erste, zweite und dritte Schwenkposition verschwenkbar.

Nach einer weiteren vorteilhaften Ausführungsform ist lediglich eine Lagerungsachse vorgesehen. Vorteilhafterweise erstreckt sich die Lagerungsachse zumindest über die gesamte Breitenerstreckung der beiden Rahmenelemente. Die Lagerungsachse erstreckt sich wie bereits beschrieben durch die Durchgangskanäle der beiden Rahmenelemente. Vorzugsweise ist die Lagerungsachse in zumindest zwei, bevorzugt genau zwei Aufnahmeeinrichtungen der Befestigungseinrichtung aufgenommen.

Nach einer weiteren bevorzugten Ausführungsform ist eine erste Aufnahmeeinrichtung zwischen den beiden Rahmenelementen angeordnet. Vorzugsweise ist eine weitere zweite Aufnahmeeinrichtung seitlich von einem der beiden Rahmenelemente, beziehungsweise an einer der beiden Außenseiten des Sitzanordnung angeordnet. Vorzugsweise ist zumindest ein Armelement vorgesehen, an welchem das erste Aufnahmeelement angeordnet ist.

Nach einer weiteren bevorzugten Ausführungsform umfasst die Befestigungseinrichtung zwei Armelemente. Vorteilhafterweise ist die zwischen den beiden Rahmenelementen angeordnete erste Aufnahmeeinrichtung an einem ersten Armelement angeordnet. Die zweite Aufnahmeeinrichtung ist bevorzugt an einem zweiten Armelement angeordnet. Die zweite Aufnahmeeinrichtung und das zweite Armelement sind dabei vorteilhafterweise an einer Außenseite der Sitzanordnung angeordnet.

Vorteilhafterweise ist an dieser Außenseite auch das zumindest eine Griffelement angeordnet. Durch das Vorsehen der zweiten Aufnahmeeinrichtung und des zweiten Armelements an der gleichen Außenseite wie das zumindest eine Griffelement, können die in die Sitzanordnung einbringbaren Kräfte effektiv über das zweite Armelement abgeleitet werden. Die Sitzanordnung weist demnach eine vorteilhafte erhöhte Stabilität an der Außenseite der Sitzanordnung auf.

Beide Armelemente sind vorteilhafterweise an dem Boden der Transporteinrichtung fixierbar. Denkbar wäre auch, dass die Armelement an einer Schienenanordnung fixiert sind. Durch eine solche Ausgestaltung kann die Position der Sitzanordnung in dem Transportmittel variiert werden. Die beiden Armelemente sind bezüglich einer Referenzachse, welche senkrecht zu der fiktiven ersten Ebene verläuft, um einen Neigungswinkel γ geneigt. Der Neigungswinkel γ liegt in einem Bereich zwischen 5° und 20°, bevorzugt in einem Bereich zwischen 10° und 15°.

Nach einer weiteren vorteilhaften Ausführungsform umfassen das erste und/oder das zweite Armelement ein Fußauflageelement. Vorzugsweise ist das Fußauflageelement parallel zu der ersten fiktiven Ebene orientiert.

Nach einer weiteren bevorzugten Ausführungsform ist die zweite Aufnahmeeinrichtung an einem Befestigungselement angeordnet. Mittels des Befestigungselements kann die Aufnahmeeienrichtung an einem Wandelement des Transportmittels angeordnet werden. Das Befestigungselement ist demnach in einer Befestigungsebene angeordnet, welche im Wesentlichen parallel zu der zweiten fiktiven Ebene sich erstreckt. Vorteilhafterweise umfasst das Wandelement des Transportmittels die Befestigungsebene. Vorzugsweise ist ein solches Wandelement eine Seitenwand des Transportmittels. Die erste Aufnahmeeinrichtung kann dabei an einem Armelement angeordnet sein. Dieses Armelement kann dabei als Kragarm oder Cantilever ausgestaltet sein. Das Armelement erstreckt sich demnach ausgehend von der Befestigungsebene hin zu der ersten Aufnahmeeinrichtung. Bevorzugt mündet das Armelement in einem zweiten Befestigungselement, welches ebenso in der Befestigungsebene angeordnet ist und an dem Wandelement des Transportmittel anordenbar ist. Vorzugsweise erstreckt sich das Armelement ausgehend von zweiten Befestigungselement schräg entlang der Höhenachse (Z) nach oben zu der ersten Aufnahmeeinrichtung.

Nach einer weiteren vorteilhaften Ausführungsform ist anstatt der oben genannten ersten und zweiten Befestigungselemente lediglich ein Befestigungselement vorgesehen, welches sich entlang der Befestigungsebene erstreckt. Das Armelement, beziehungsweise der Kragarm erstreckt sich vorzugsweise von diesem Befestigungselement aus zu der ersten Aufnahmeeinrichtung. Die zweite Aufnahmeeinrichtung ist bevorzugt an dem Befestigungselement angeordnet. Mit anderen Worten ausgedrückt, sind das oben genannte erste und zweite Befestigungselement zu einem gesamten Befestigungselement ausgebildet.

Nach einer weiteren bevorzugten Ausführungsform sind die erste und die zweite Aufnahmeeinrichtung der Befestigungseinrichtung an den Außenseiten der Sitzanordnung angeordnet. Die beiden Rahmenelemente sind somit zwischen den Aufnahmeeinrichtungen angeordnet. Zwischen den beiden Rahmenelementen ist anstatt einer Aufnahmeeinrichtung lediglich ein vorzugsweise hülsenförmiges Abstandselement vorgesehen. Vorzugsweise umfasst die Befestigungseinrichtung zwei Armelemente, welche in einem Basiselement münden, wobei an jedem Armelement eine Aufnahmeeinrichtung für die Lagerungsachse angeordnet ist. Vorzugsweise ist das Basiselement mittig zu, und entlang der Höhenachse (Z) unter, den beiden Rahmenelementen angeordnet. Die Armelemente sind entlang der Höhenachse (Z) nach unten zusammenlaufend ausgestaltet. Vorzugsweise sind die Armelemente im Wesentlichen V-förmig ausgestaltet. Es kann somit eine vorteilhafte symmetrische Krafteinleitung in das Basiselement erfolgen. Durch eine derartige Ausgestaltung kann die Sitzordnung äußerst einfach gestaltet werden. Die Befestigungseinrichtung greift direkt an der Lagerungsachse für das Rahmenelement an. Es erübrigen sich somit jegliche zusätzliche Bauelemente zur Lagerung des Rahmenelements.

Das Basiselement kann vorteilhafterweise direkt an dem Boden des Transportmittels fixiert werden. Denkbar wäre auch, dass die Befestigungseinrichtung beziehungsweise das Basiselement mittels eines Führungssystems an dem Boden des Transportmittels verlagerbar angeordnet ist. Ein solches Führungssystem kann beispielsweise ein Schienensystem sein. Durch das vorteilhafte Zusammenlaufen der Armelemente ist das Basiselement mittig unterhalb der beiden Rahmenelemente angeordnet. Es kann somit eine vorteilhafte symmetrische Krafteinleitung in dieses Basiselement erfolgen. Dies hat den Vorteil, dass das Führungssystem wesentlich einfacher gestaltet werden kann. So kann beispielsweise nur eine Schiene vorgesehen werden, auf welcher die Sitzanordnung verlagerbar angeordnet werden kann. Ferner ist es von Vorteil, dass eine Arretierungseinrichtung vorgesehen ist, mittels welcher die Sitzanordnung an der gewünschten Position im Innenraum des Transportmittels arretierbar ist.

Bei den oben beschriebenen Ausführungsformen ist es von Vorteil, dass das jeweilige Armelement und die jeweilige Aufnahmeeinrichtung einteilig oder einstückig ausgestaltet sind . Ferner können bevorzugt das jeweilige Aufnahmeeinrichtung und das jeweilige Befestigungselement einteilig oder einstückig ausgestaltet sein.

Durch die Lagerung der durchgehenden Lagerungsachse mittels zweier Aufnahmeeinrichtungen ist eine ausreichende Stabilität der Sitzanordnung gegeben. Ein weiterer dritter Lagerungspunkt ist demnach nicht notwendig. Hierdurch wird eine Sitzanordnung mit einer beträchtlichen Materialersparnis bereitgestellt.

Nach einer bevorzugten Ausführungsform sind das zumindest eine Rahmenelement aus einer Metalllegierung, vorzugsweise aus einer Aluminiumlegierung gefertigt. Auch die Befestigungseinrichtung kann zumindest teilweise aus einer Metalllegierung, vorzugsweise aus einer Aluminiumlegierung gefertigt sein. Dadurch kann die Sitzanordnung möglichst leicht gebaut werden.

Die zugrundeliegende Aufgabe wird ebenso von einer Inneneinrichtung eines Transportmittels insbesondere ein Personentransportmittel gelöst, welches zumindest eine Sitzanordnung nach einer der vorhergehenden Ausführungsformen umfasst. Die Inneneinrichtung kann dabei mit allen bereits obig im Rahmen der Sitzanordnung beschriebenen Merkmalen einzeln oder in Kombination miteinander ausgestattet sein und umgekehrt.

Vorzugsweise umfasst die Inneneinrichtung eine Mehrzahl an Sitzanordnungen.

Nach einer bevorzugten Ausführungsform ist die zumindest eine Sitzanordnung ortsfest oder mittels einer Führungsvorrichtung, insbesondere einer Schienenvorrichtung verlagerbar an dem Transportmittel angeordnet. Die Führungsvorrichtung kann an dem Boden oder einem Wandelement des Transportmittels angeordnet sein. Die Sitzanordnungen können somit vorteilhafterweise in einem Verstaubereich des Transportmittels, beispielsweise einem Schienenfahrzeug untergebracht sein. Der Raum des Transportmittels könnte somit mit Sperrgepäck, beispielsweise Fahrräder ausgefüllt werden. Je nach Bedarf kann eine bestimmte Anzahl an Sitzordnungen aus dem Verstaubereich in den Innenraum befördert werden und an bestimmten Stellen entsprechend festgelegt werden. Dies kann durch entsprechende vorteilhafte Rastvorrichtungen erfolgen.

Schließlich ist ein Transportmittel, insbesondere ein Personentransportmittel, beispielsweise ein Schienenfahrzeug vorgesehen, welches zumindest eine Inneneinrichtung, beziehungsweise zumindest eine Sitzanordnung aufweist.

Weitere Vorteile, Ziele und Eigenschaften der vorliegenden Erfindung werden anhand nachfolgender Beschreibung der anliegenden Figuren erläutert. Gleichartige Komponenten können in den verschiedenen Ausführungsformen gleiche Bezugszeichen aufweisen.

In den Figuren zeigen:
- Fig.1a, 1b: eine perspektivische Ansicht einer Sitzanordnung nach einer Ausführungsform;
- Fig.2a, 2b: eine perspektivische Ansicht einer Sitzanordnung nach einer Ausführungsform;
- Fig.3: eine Seitenansicht einer Sitzanordnung nach einer Ausführungsform;
- Fig.4: eine Explosionsdarstellung einer Sitzanordnung nach einer Ausführungsform;
- Fig.5: eine perspektivische Ansicht einer Sitzanordnung nach einer Ausführungsform;
- Fig.6a - 6d: eine Vorderansicht, eine Rückansicht, eine Seitenansicht und eine Ansicht von unten von der Ausführungsform gemäß Figur 5;
- Fig.7: eine perspektivische Ansicht einer Sitzanordnung nach einer Ausführungsform;
- Fig.8a - 8d: eine Vorderansicht, eine Rückansicht, eine Seitenansicht und eine Ansicht von unten von der Ausführungsform gemäß Figur 7;
- Fig.9: eine perspektivische Ansicht einer Sitzanordnung nach einer Ausführungsform;
- Fig.10a - 10d: eine Vorderansicht, eine Rückansicht, eine Seitenansicht und eine Ansicht von unten von der Ausführungsform gemäß Figur 9;
- Fig.11a - 11d: Ansichten verschiedener möglicher Schwenkpositionen einer Sitzanordnung nach einer Ausführungsform;
- Fig.12a - 12d: Ansichten verschiedener möglicher Schwenkpositionen einer Sitzanordnung nach einer Ausführungsform;
- Fig.13: eine Explosionsdarstellung einer Sitzanordnung nach einer Ausführungsform;
- Fig.14: Vorderansicht einer Sitzanordnung nach einer Ausführungsform;
- Fig.15: eine Explosionsdarstellung eines Rahmenelements nach einer Ausführungsform;
- Fig.16: eine Schnittdarstellung eines Rahmenelements nach einer Ausführungsform;
- Fig.17a - 17c: Schnittdarstellungen eines Rahmenelements in verschiedenen Schwenkzuständen nach einer Ausführungsform;
- Fig.18a, 18b: Ansichten einer Sitzanordnung nach einer Ausführungsform mit einem Sitzbezug;
- Fig.19: Inneneinrichtung eines Transportmittels.

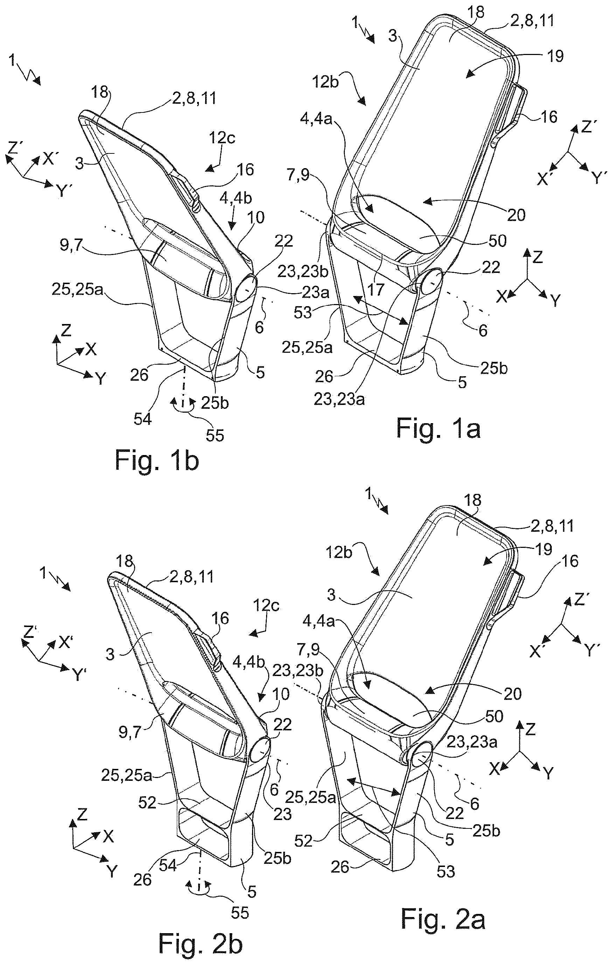

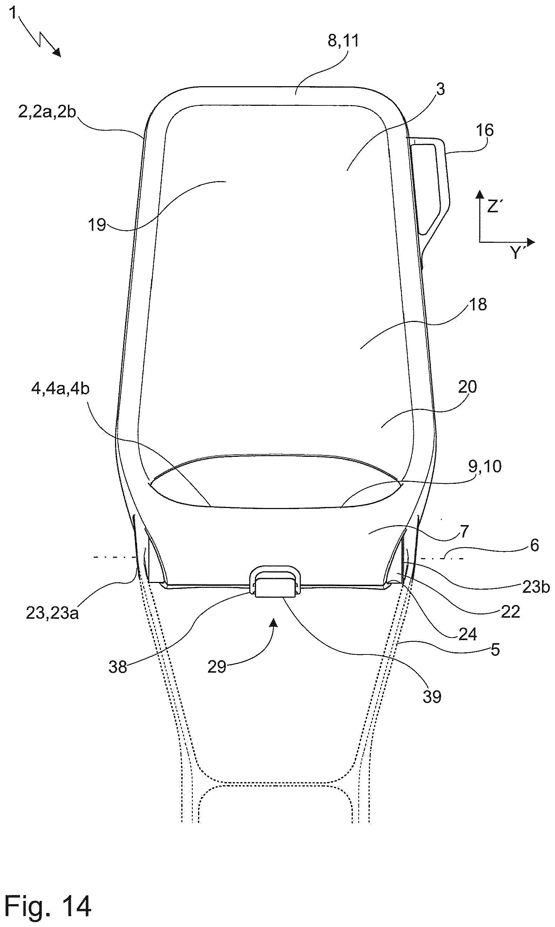

In den Figuren 1 bis 19 ist eine Sitzanordnung 1 für ein Transportmittel 101, insbesondere für ein Personentransportmittel gezeigt, wobei die Sitzanordnung 1 mittels einer Befestigungseinrichtung 5 an, beziehungsweise in dem Transportmittel 101 anordenbar ist, wobei die Sitzanordnung 1 zumindest ein Rahmenelement 2, 2a, 2b mit einem oberen Bereich 3, welcher zur Abstützung des Rückens vorgesehen und geeignet ist und zumindest einen in dem zumindest einem Rahmenelement 2, 2a, 2b integrierten Sitzbereich 4, 4a, 4b umfasst. Das zumindest eine Rahmenelement 2, 2a, 2b übernimmt demnach die Funktion einer Rückenlehne und gleichermaßen die Funktion eines Sitzteils. Es wird demnach eine äußerst einfache und kostengünstig herzustellende Sitzanordnung 1 bereitgestellt.

Im Folgenden wird für die Sitzanordnung ein Koordinatensystem mit einer Höhenachse Z einer Breitenachse Y und einer Tiefenachse X verwendet. Für das zumindest eine Rahmenelement wird ein Koordinatensystem mit einer Höhenachse Z` einer Breitenachse Y` und einer Tiefenachse X' verwendet. Die jeweiligen Achsen können weiterhin jeweils zwei Richtungen aufweisen.

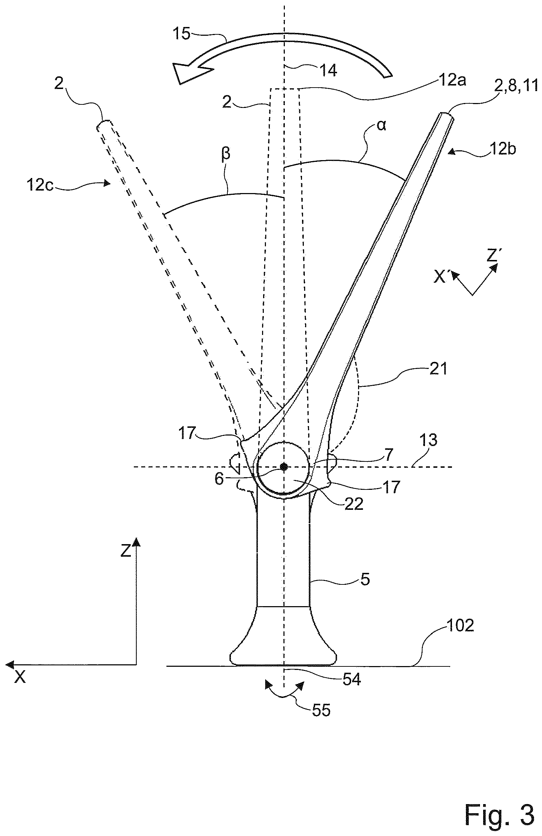

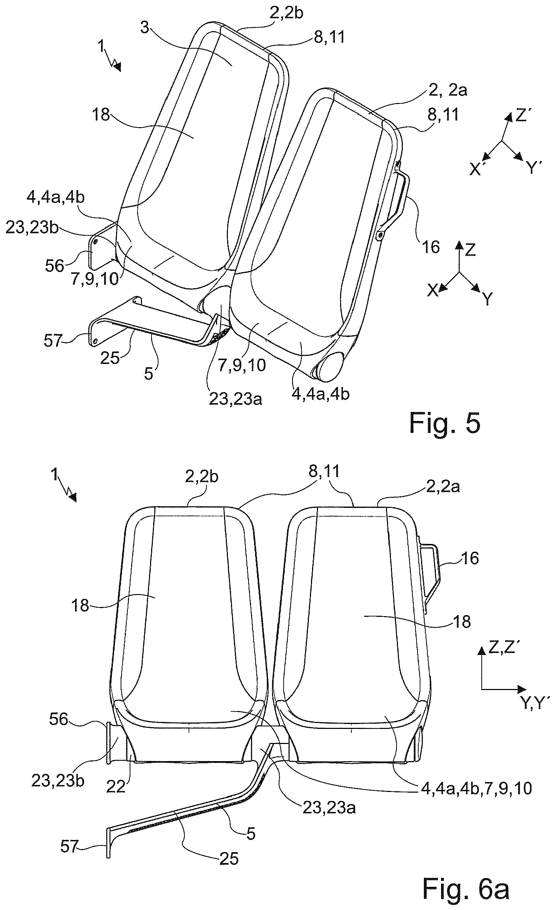

In den Figuren 1a bis 2b und 4 ist die Sitzanordnung 1 dargestellt, welche lediglich ein an der Befestigungseinrichtung 5 angeordnetes Rahmenelement 2 umfasst. In den Figuren 5 bis 13 sind Sitzanordnungen 1 gezeigt, welche jeweils zwei Rahmenelement 2, 2a, 2b umfassen. In der Figur 3 werden verschiedene Schwenkpositionen gezeigt, welche sowohl für eine Sitzanordnung 1 mit einem Rahmenelement 2 als auch für eine Sitzanordnung 1 mit zwei Rahmenelementen 2, 2a, 2b zutrifft.

Die Sitzanordnung 1 ist dafür vorgesehen und geeignet, eine Sitzposition in Stehhöhe bereitzustellen. Derartige Sitzanordnungen 1 werden auch als Stehsitz bezeichnet. Der zumindest eine Sitzbereich ist bevorzugt in einer Höhe zwischen 40 cm und 150 cm, weiter bevorzugt in einer Höhe zwischen 50 cm und 130 cm angeordnet.

Die Sitzhöhe kann vorteilhafterweise auf die vorgesehenen Zielpersonen abgestimmt werden. In Figur 1a, 1b ist beispielsweise eine Sitzanordnung1 dargestellt, welche eher für Kinder oder ältere Menschen geeignet ist. Vorzugsweise liegt hier die Sitzhöhe in einem Bereich zwischen 40 cm und 60 cm. In den Figuren 2a und 2b ist eine Sitzanordnung 1 dargestellt, welche eher für Erwachsene geeignet ist. Die Sitzhöhe würde hier eher in einem Bereich zwischen 80 cm und 150 cm, weiter bevorzugt in einem Bereich zwischen 90 cm und 130 cm liegen.

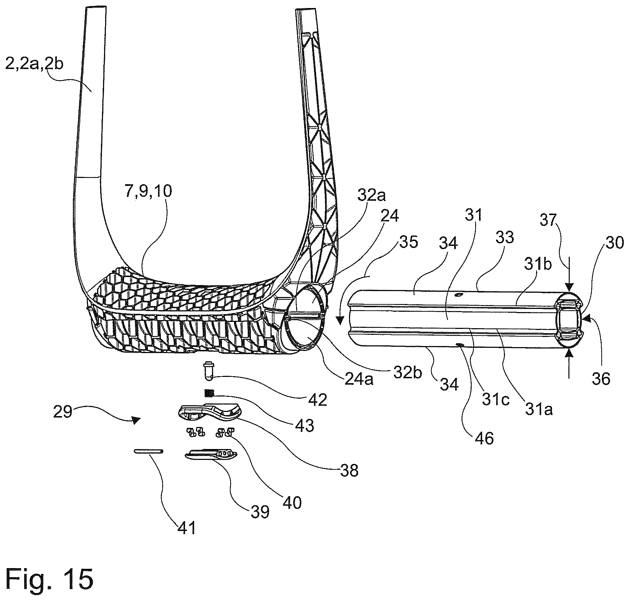

Das zumindest eine Rahmenelement 2, 2a, 2b kann in Ausgestaltung der Sitzanordnung 1 mit einem Rahmenelement 2, 2a, 2b als auch in der Ausgestaltung der Sitzanordnung 1 zwei Rahmenelementen 2, 2a, 2b gleichartig ausgebildet sein. Das zumindest eine Rahmenelement 2, 2a, 2b wird durch einen unteren Abschnitt 7 und einen oberen Abschnitt 8 gebildet. Der untere Abschnitt 7 umfasst dabei zumindest einen sich im Wesentlichen entlang einer Breitenachse Y, Y` erstreckenden ersten Querabschnitt 9 und einen sich im Wesentlichen entlang einer Breitenachse Y, Y` erstreckenden zweiten Querabschnitt 10. Bevorzugt sind der erste und der zweite Querabschnitt einstückig oder einteilig ausgebildet. Der erste 9 und der zweite Querabschnitt 10 können in einer wabenförmigen Gitterstruktur an-geordnete Ausnehmungen aufweisen (siehe beispielsweise Figur 15). Hierdurch kann der untere Abschnitt 7 ein sehr geringes Gewicht und trotzdem eine ausreichende Stabilität aufweisen. Der obere Abschnitt 8 umfasst weiterhin einen sich entlang der Breitenachse Y, Y` erstreckenden dritten Querabschnitt 11. Die beiden Breitenachsen Y, Y` sind hier deckungsgleich.

Der erste Querabschnitt 9 und der zweite Querabschnitt 10 sind entlang der Höhenachse Z` von dem dritten Querabschnitt 11 beabstandet. Dabei sind der erste Querabschnitt 9 und der zweite Querabschnitt 10 mittels zweier Strebenelemente 27 verbunden. Das zumindest eine Rahmenelement 2, 2a, 2b umfasst demnach ein Innenfläche 28, welche von dem oberen Abschnitt 8 und dem unteren Abschnitt 7, beziehungsweise von dem dritten Querabschnitt den beiden Strebenelementen 27, den ersten Querabschnitt 9 und dem zweiten Querabschnitt 10 umrandet ist. Das zumindest eine Rahmenelement 2, 2a, 2b ist dabei im Wesentlichen trapezartig ausgebildet. Der dritte Querabschnitt 11 hat dabei eine geringere Breitenerstreckung als der erste 9 und zweite Querabschnitt 10.

Der erste Querabschnitt 9 und der zweite Querabschnitt 10 weisen eine größere Erstreckung entlang einer Tiefenachse X' auf als der dritte Querabschnitt 11. Der erste Querabschnitt 9 oder der zweite Querabschnitt 10 bilden zumindest abschnittsweise den Sitzbereich 4, 4a, 4b aus.

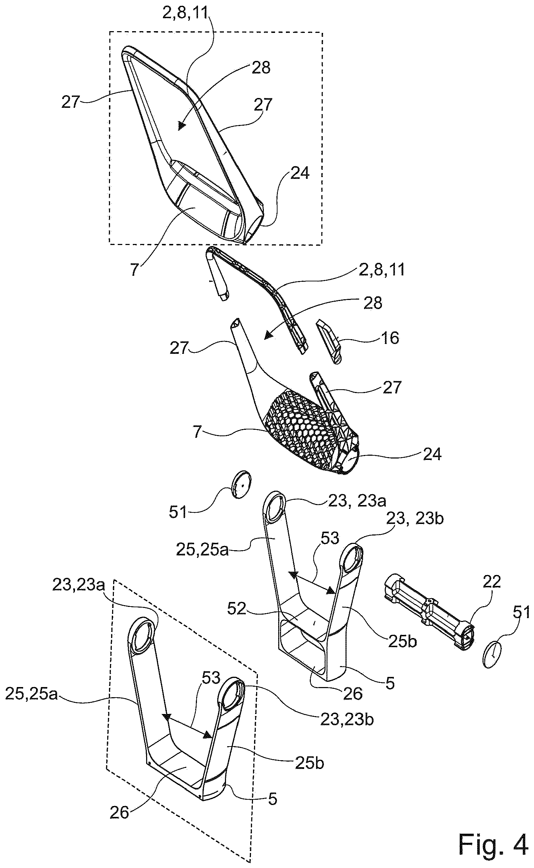

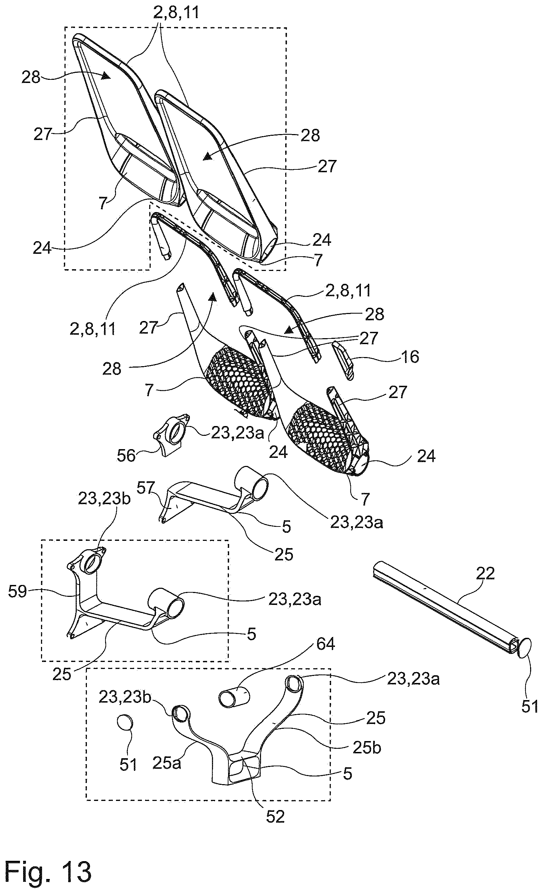

Der untere Abschnitt 7 und der obere Abschnitt 8 des zumindest einen Rahmenelements 2, 2a, 2b bilden das zumindest eine Rahmenelement 2, 2a, 2b einteilig, einstückig oder mehrteilig aus. In den Figuren 4 und 13 ist in den mit Strichlinien umrandeten Bereich jeweils eine einteilig ausgebildete Ausgestaltung des/der Rahmenelemente 2, 2a, 2b dargestellt. In diesen Figuren ist auch eine weitere Ausgestaltung des/der Rahmenelemente(s) 2, 2a, 2b dargestellt, in welcher dieses/diese zweiteilig ausgebildet ist/sind. Das zumindest eine Rahmenelement besteht hierzu aus einem unteren Abschnitt 7 und einem oberen Abschnitt 8, wobei beide Abschnitte 7 und 8 U-förmig ausgestaltet sind. Hierzu sind die beiden Strebenelemente 27 unterbrochen und mittels einer lösbaren Verbindung, bevorzugt einer Steckverbindung verbunden.

Das zumindest eine Rahmenelement 2, 2a, 2b ist um eine sich entlang einer Breitenachse Y erstreckende Schwenkachse 6 relativ zu der Befestigungseinrichtung 5 verschwenkbar. Das zumindest eine Rahmenelement 2, 2a, 2b ist als Ganzes bezüglich der Schwenkachse 6 verschwenkbar. Somit werden sowohl der obere Bereich 3 zur Abstützung des Rückens als auch der integrierte Sitzbereich 4, 4a, 4b gleichzeitig um die Schwenkachse 6 verschwenkt, beziehungsweise rotiert. Im Gegensatz dazu ist bei herkömmlichen Sitzanordnungen lediglich die Rückenlehne um eine Schwenkachse schwenkbar. Bevorzugt ist das zumindest eine Rahmenelement 2, 2a, 2b in zumindest zwei Schwenkpositionen 12a, 12b, 12c schwenkbar, weiter bevorzugt ist das zumindest eine Rahmenelement 2, 2a, 2b in zu drei Schwenkpositionen 12a, 12b, 12c verschwenkbar. Diese Schwenkpositionen 12a, 12b 12c sind beispielsweise in der Figur 3 dargestellt. In dieser Figur ist auch der Doppelpfeil 15 dargestellt, welcher die Schwenkrichtungen noch einmal verdeutlicht.

Das zumindest eine Rahmenelement 2, 2a, 2b ist in eine erste Schwenkposition 12a schwenkbar, wobei sich das zumindest eine Rahmenelement 2, 2a, 2b in der ersten Schwenkposition 12a) im Wesentlichen senkrecht zu einer ersten fiktiven Ebene 13 erstreckt, welche sich parallel zu dem Boden 102 des Transportmittels 101 erstreckt. Mit anderen Worten erstreckt sich das zumindest eine Rahmenelement 2, 2a, 2b in der ersten Schwenkposition aufrecht oder im Wesentlichen parallel zu der Höhenachse Z der Sitzanordnung 1. In dieser Schwenkposition nimmt die Sitzanordnung 1 entlang der Tiefenachse nur einen minimalen Raumbedarf ein, welcher im Wesentlichen die Erstreckung des ersten 9 und zweiten Querabschnitts 10 entspricht.

Das zumindest eine Rahmenelement 2, 2a, 2b ist in eine zweite Schwenkposition 12b schwenkbar, welche relativ zu der ersten Schwenkposition 12a um einen Neigungswinkel α geneigt ist. Ferner ist das zumindest eine Rahmenelement 2, 2a, 2b in eine dritte Schwenkposition 12c schwenkbar, welche relativ zu der ersten Schwenkposition 12a um einen Neigungswinkel β geneigt ist. Es kann eine zweite fiktive Ebene 14 definiert werden, welche senkrecht zur ersten fiktiven Ebene 13 verläuft. Das zumindest eine Rahmenelement 2, 2a, 2b ist in der ersten Schwenkposition im Wesentlichen in der zweiten fiktiven Ebene 14 angeordnet. In der zweiten 12b und der dritten Schwenkposition 12c schließt das zumindest eine Rahmenelement 2, 2a, 2b jeweils den Neigungswinkel α, beziehungsweise β mit der zweiten fiktiven Ebene 14 ein. Das zumindest eine Rahmenelement 2, 2a, 2b ist dabei in der zweiten Schwenkposition 12b und der dritten Schwenkposition 12c in entlang der Tiefenachse X entgegengesetzten Richtungen geneigt. Die Neigungswinkel α und β weisen somit ein unterschiedliches Vorzeichen (±), jedoch den gleichen Betrag auf. Vorzugsweise liegen die Neigungswinkel α, β in einem Bereich zwischen 10° und 80°, weiter bevorzugt in einem Bereich zwischen 20° und 70°, wobei das zumindest eine Rahmenelement 2, 2a, 2b und die zweite fiktive Ebene14 die Neigungswinkel α, β einschließen.

Weiterhin ist eine Arretierungsvorrichtung 29 vorgesehen, mittels welcher das zumindest eine Rahmenelement 2, 2a, 2b in zumindest einer Schwenkposition 12a, 12b, 12c arretierbar ist. Bevorzugt ist das zumindest eine Rahmenelement 2, 2a, 2b in der ersten 12a, der zweiten 12b und der dritten Schwenkposition 12c arretierbar. Denkbar wäre auch, dass das zumindest eine Rahmenelement 2, 2a, 2b lediglich in der zweiten 12b und der dritten Schwenkposition 12c arretierbar ist.

In der zweiten Schwenkposition 12b des zumindest einen Rahmenelements 2, 2a, 2b wird ein erster Sitzbereich 4, 4a zumindest durch den ersten Querabschnitt 9 gebildet. Dies ist beispielsweise in den Figuren 1a und 2a erkennbar. In der dritten Schwenkposition 12c des zumindest einen Rahmenelements 2, 2a, 2b ist ein zweiter Sitzbereich 4, 4b zumindest durch den zweiten Querabschnitt 10 gebildet. Dies ist beispielsweise in den Figuren 1b und 2b erkennbar. In der zweiten Schwenkposition 12b des zumindest einen Rahmenelements 2, 2a, 2b erstreckt sich der erste Sitzbereich 4, 4a im Wesentlichen parallel zu der ersten fiktiven Ebene 13. In der dritten Schwenkposition 12c des zumindest einen Rahmenelements 2, 2a, 2b erstreckt sich der zweite Sitzbereich 4, 4b im Wesentlichen parallel zu der ersten fiktiven Ebene 13. Durch diese im Wesentlichen parallele Erstreckung des ersten, beziehungsweise zweiten Sitzbereichs 4, 4a, 4b wird dem Insassen eine bequeme Sitzposition ermöglicht.

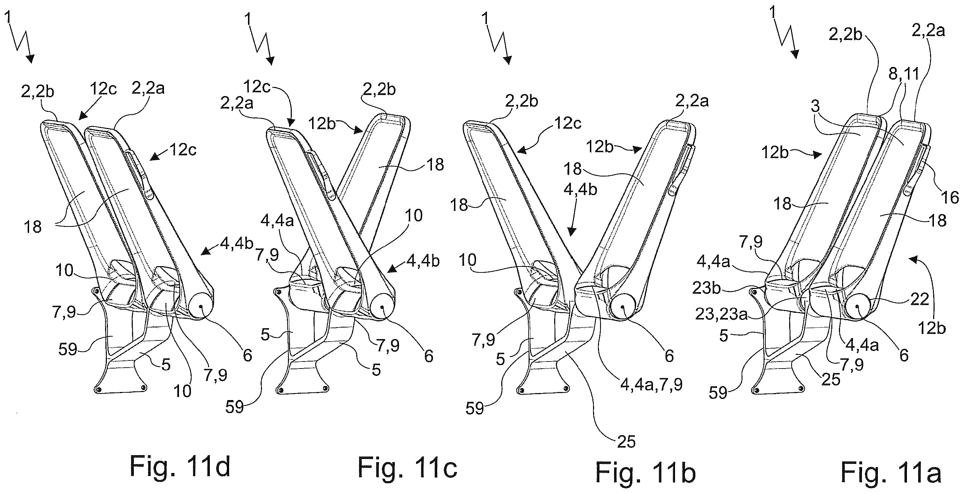

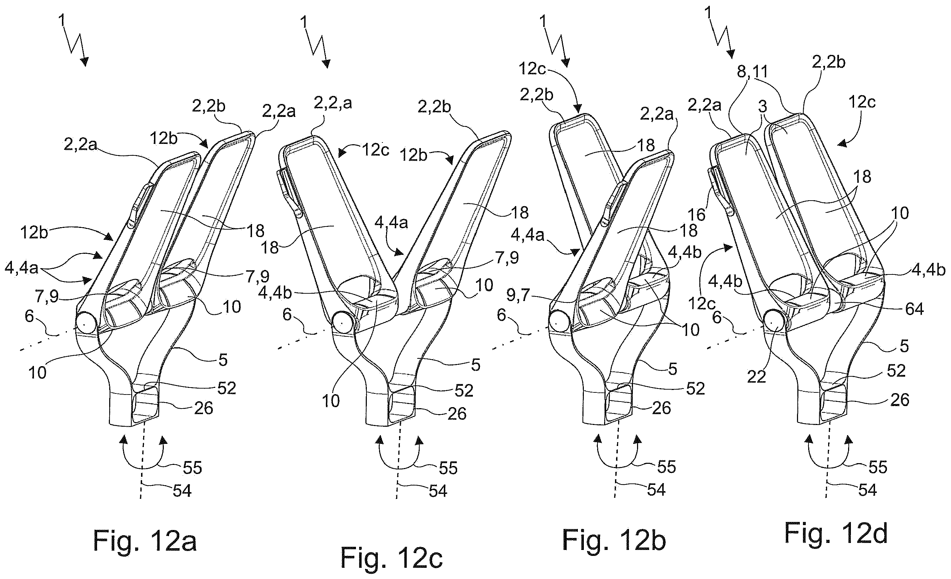

In den Figuren 11a bis 11d und 12a bis 12d sind Sitzanordnungen 1 mit zwei Rahmenelementen 2, 2a, 2b in verschiedenen Schwenkpositionen 12a, 12b, 12c gezeigt. Die Figuren 11a bis 11d unterscheiden sich von den Figuren 12a bis 12d von der Ausgestaltung der Befestigungseinrichtung 5. Sitzanordnungen 1, welche eine Befestigungseinrichtung 5 gemäß einer der weiteren möglichen Ausgestaltungen umfassen, können jedoch ebenso diese dargestellten Schwenkpositionen einnehmen. In den Figuren 11a und 12a befinden sich die beiden Rahmenelemente 2, 2a, 2b in der zweiten Schwenkposition 12b. Es wird somit von jedem der Rahmenelemente 2, 2a, 2b der erste Sitzbereich 4, 4a in Form von dem ersten Querabschnitt 9 bereitgestellt. In den Figuren 11d und 12d befinden sich die beiden Rahmenelemente 2, 2a, 2b in der dritten Schwenkposition 12c. Es wird somit von jedem der Rahmenelemente 2, 2a, 2b der zweite Sitzbereich 4, 4b in Form von dem zweiten Querabschnitt 10 bereitgestellt. In den Figuren 11b und 12b befinden sich das erste Rahmenelement 2a in der zweiten Schwenkposition 12b, wodurch der erste Sitzbereich 4, 4a in Form von dem ersten Querabschnitt 9 bereitgestellt wird. Das zweite Rahmenelement 2b befindet sich in der dritten Schwenkposition 12c, wodurch der zweite Sitzbereich 4, 4b in Form von dem zweiten Querabschnitt 10 bereitgestellt wird. In den Figuren 11c und 12c befinden sich das erste Rahmenelement 2a in der dritten Schwenkposition 12c, wodurch der zweite Sitzbereich 4, 4b in Form von dem zweiten Querabschnitt 10 bereitgestellt wird. Das zweite Rahmenelement 2b befindet sich in der zweiten Schwenkposition 12b, wodurch der erste Sitzbereich 4, 4a in Form von dem ersten Querabschnitt 9 bereitgestellt wird. Durch eine derartige Ausgestaltung können Sitzgruppen bestehend aus solchen Sitzanordnungen 1 flexibel und individuell abgestimmt werden.

Der Sitzbereich 4, 4a, 4b kann weiterhin vergrößert werden, wenn zumindest ein Zusatzelement 17 vorgesehen ist, welches an dem unteren Abschnitt 7 des zumindest einen Rahmenelements 2, 2a, 2b angeordnet ist. Durch das zumindest eine Zusatzelement 17 wird die Tiefenerstreckung des Sitzbereichs 4, 4a, 4b vergrößert. Ein solches Zusatzelement ist in Figur 3 angedeutet und kann durch eine kraft und/oder formschlüssige Verbindung an dem Rahmenelement 2, 2a, 2b angebracht werden. Mögliche Verbindungen sind Clipsverbindungen, Schraubverbindungen, Steckverbindungen usw.

Das zumindest eine Rahmenelement 2, 2a, 2b ist an der Befestigungseinrichtung 5 mittels einer Lagerungsachse 22 angeordnet. Die Lagerungsachse 22 ist in zumindest einer Aufnahmeeinrichtung 23, 23a, 23b der Befestigungseinrichtung 5 derart aufgenommen, dass die Lagerungsachse 22 drehfest mit der Befestigungseinrichtung 5 verbunden ist. Weiterhin erstreckt sich die Lagerungsachse 22 durch einen Durchgangskanal 24 des zumindest einen Rahmenelements 2, 2a, 2b, wodurch das zumindest eine Rahmenelement 2, 2a, 2b verschwenkbar relativ zu der Befestigungseinrichtung 5, beziehungsweise der Lagerungsachse 22 verschwenkbar angeordnet ist.

In den Figuren 4, 13 und 15 bis 17c ist die Lagerungsachse 22 detailliert dargestellt. Die Lagerungsachse 22 ist im Wesentlichen hohlzylindrisch beispielsweise als Profilrohr ausgebildet. Weiterhin umfasst die Lagerungsachse 22 zumindest einen, bevorzugt zwei Führungsabschnitt(e) 30, 31, in welchem jeweils ein Führungsvorsprung 32a, 32b des zumindest einen Rahmenelements 2, 2a, 2b geführt wird. Die Führungsvorsprünge 32a, 32b sind in dem Durchgangskanal 24 des zumindest einen Rahmenelements 2, 2a, 2b angeordnet und erstreckt sich vorzugsweise über die gesamte Erstreckung entlang der Breitenachse Y des Durchgangskanals 24. Der Durchgangskanal kann sich dabei entlang der gesamten Breitenerstreckung, beziehungsweise des zumindest einen Rahmenelements 2, 2a, 2b erstrecken oder zumindest entlang eines wesentlichen Abschnitts der Breitenerstreckung. Ein wesentlicher Abschnitt ist zumindest die Hälfte, bevorzugt zumindest drei Viertel der gesamten Breitenerstreckung des Rahmenelements. Ebenso erstrecken sich die Führungsabschnitte 30, 31 über die gesamte Länge der Lagerungsachse 22. Die Führungsabschnitte 30, 31 sind diametral gegenüberliegend an der Lagerungsachse 22 vorgesehen. Denkbar ist jedoch auch, dass lediglich ein Führungsabschnitt 30, 31 vorgesehen ist, in welchem ein Führungsvorsprung 32a, 32b geführt ist.

Die Mantelfläche 33 der Lagerungsachse 20 weist zwei äußere Bereiche 34 auf, an welchen eine Innenfläche 24a des Durchgangskanals 24 derart anliegt, dass eine Rotation des zumindest einen Rahmenelements 2, 2a, 2b relativ zu der Lagerungsachse 22 ermöglicht ist. Entlang einer Umfangsrichtung 35 der Lagerungsachse 22 ist zwischen den beiden äußeren Bereichen 34 jeweils ein Führungsabschnitt 30, 31 vorgesehen. Diese Führungsabschnitte 30, 31 sind als eine Art Ausnehmung ausgestaltet. Ein Radius 36 zu den Innenflächen 30a, 31a der Führungsabschnitte 30, 31 ist somit kleiner als ein Radius 37 zu den äußeren Bereichen 34. Wie in den Figuren 15 bis 17c ersichtlich, sind die Innenflächen 30a, 31a der Führungsabschnitte 30, 31 derart ausgestaltet, dass diese sich nach außen wölben. Die Führungsabschnitte 30, 31 weisen jeweils zwei Anschlagflächen 30b, 31b, 30c, 31c auf, welche den Übergang zu den angrenzenden äußeren Bereichen 34 darstellen. In der zweiten und dritten Schwenkposition 12b, 12c liegen die Führungsvorsprünge 32a, 32b an den jeweils diametral gegenüberliegenden Anschlagflächen 30b, 31b, 30c, 31c der Führungsabschnitte 30, 31 an.

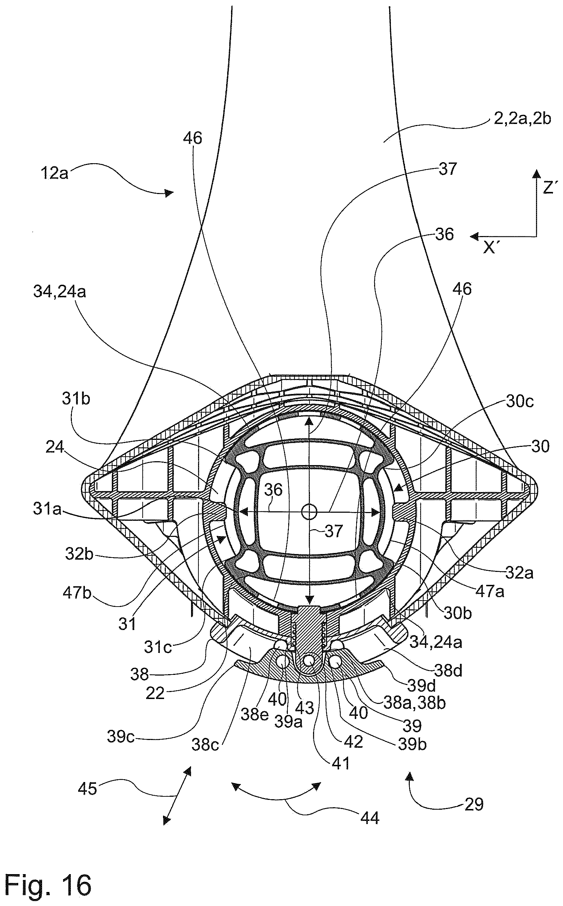

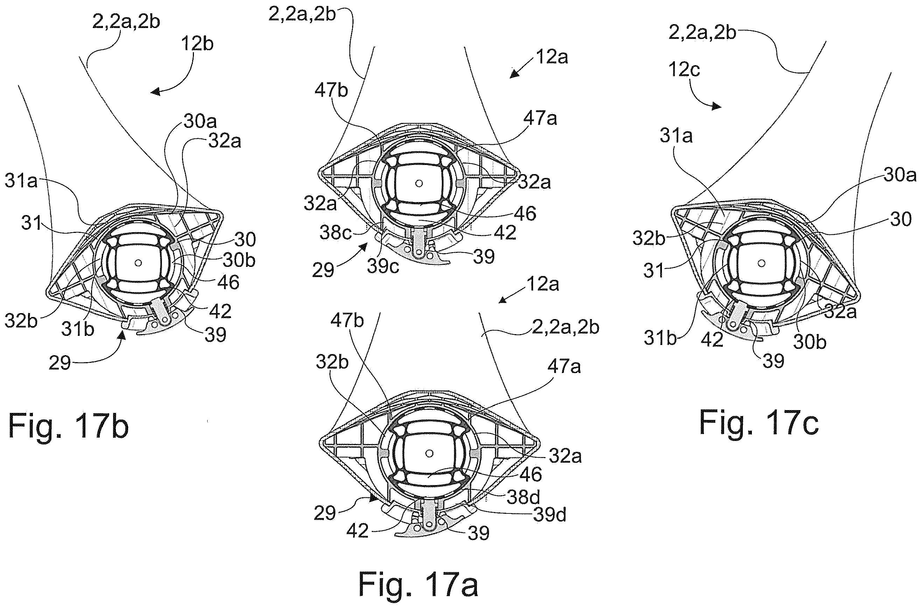

Weiterhin ist eine Arretierungsvorrichtung 29 vorgesehen, mittels welcher die durch die Verschwenkung möglichen Schwenkpositionen 12a, 12b, 12c arretierbar sind. Die Arretierungsvorrichtung 29 ist in den Figuren 16 bis 17c detailliert dargestellt. In der Figur 17c ist die zweite Schwenkposition 12b dargestellt. In der Figur 17b die dritte Schwenkposition 12c. In den Figuren 16 und 17a ist die erste Schwenkposition dargestellt. Aus Übersichtlichkeitsgründen sind in den Figuren 17a bis 17c nur einige besonders relevante Bezugszeichen dargestellt.

Die Arretierungsvorrichtung 29 umfasst ein Halteelement 38, mittels welchem die Arretierungsvorrichtung 29 an dem zumindest einem Rahmenelement 2, 2a, 2b vorzugsweise an einer entlang der Höhenachse Z` unteren Seite des zumindest einen Rahmenelements 2, 2a, 2b angeordnet ist. Das Halteelement 38 wird mittels einer Clipsverbindung an dem Rahmenelement 2, 2a,2b befestigt. Denkbar sind jedoch auch weitere Verbindungen. An dem Halteelement 38 ist ein Bedienelement 39 angeordnet, wobei zwischen dem Halteelement 38 und dem Bedienelement 39 Lagerungselemente 40 vorgesehen sind. Das Bedienelement 39 ist mittels einer Achse 41 an dem Halteelement 38 angebracht und ist somit wippbar. An dem Bedienelement 39 ist ein Verriegelungselement 42 in Form eines Bolzens angeordnet. Weiterhin ist eine Druckfeder 43 zwischen dem Verriegelungselement 42 und dem Halteelement 38 angeordnet. Das Verriegelungselement 42 ist somit mit einer Federkraft beaufschlagt, welche das Verriegelungselement 42 radial nach innen drückt. Das Verrieglungselement 42 greift in einem Ruhezustand in eine Ausnehmung oder Bohrung 46 der Lagerungsachse 22 ein. Vorzugsweise sind mehrere Ausnehmungen 46 vorgesehen. Diese Ausnehmungen 46 sind in dem äußeren Bereich 34 der Mantelfläche 33 entlang der Umfangsrichtung der Lagerungsachse 22 angeordnet. Vorteilhafterweise sind drei Ausnehmungen 46 vorgesehen. Die Anordnung der Ausnehmungen 46 ist derart vorgesehen, dass in den vorgegebenen Schwenkpositionen 12a, 12b, 12c das Verriegelungselement 42 in eine jeweilig der Schwenkposition zugeordneten Ausnehmung 46 eingreifen kann.

Das Verriegelungselement 42 ragt durch eine Öffnung 38a des Halteelements 38, welche von einem sich nach außen erstreckenden erhöhten Kragen 38b umrandet wird. An diesem Kragen 38b liegen jeweils zwei Auflageabschnitte 39a, 39b auf. Der erste Auflageabschnitt 39a ist entlang einer Umfangsrichtung 44 dem zweiten Auflageabschnitt 39b gegenüberliegend. Das Bedienelement 39 umfasst jeweils zwei Bedienabschnitte 39c, 39d. Der erste Bedienabschnitt 39c ist entlang einer Umfangsrichtung 44 dem zweiten Bedienabschnitt 39d gegenüberliegend. Im Vergleich zu den Auflageabschnitten 39a, 39b sind die Bedienabschnitte 39c, 39d entlang der Umfangsrichtung 44 und entlang einer radialen Richtung 45 weiter außen liegend.

Bei einer Bedienung der Arretierungsvorrichtung 29 wird einer der Bedienabschnitte 39c, 39d in radialer Richtung 45 nach innen gedrückt. Der jeweilige Bedienabschnitt 39c, 39d kann somit in einen jeweiligen Ausnahmebereich 38c, 38d des Halteelements 38 bewegt werden. Durch die Beabstandung der Bedienabschnitte 39c, 39d zu den Auflageabschnitten 39a, 39b und der Auflage der Auflageabschnitte 39a, 39b an dem Kragen 38b, wirkt eine Hebelkraft auf die Achse 41, welche mittig an dem Bedienelement 39 angeordnet ist und diese mit dem Verriegelungselement 42 verbindet. Das Verriegelungselement 42 wird demnach in radialer Richtung 45 nach außen verlagert. Diese Verlagerung erfolgt entgegen der Federkraft der Druckfeder 43, wodurch die Druckfeder 43 komprimiert wird. Durch die Verlagerung wird der Eingriff des Verriegelungselements 42 mit der jeweiligen Ausnehmung 46 gelöst und das zumindest eine Rahmenelement 2, 2a, 2b kann verschwenkt werden.

In der Figur 16 ist eine Ruheposition dargestellt, in welcher sich das zumindest eine Rahmenelement 2, 2a, 2b in der ersten Schwenkposition 12a befindet. Der jeweilige Führungsvorsprung 32a, 32b des Durchgangskanals 24 befindet sich im Wesentlichen mittig entlang eines fiktiven Kreisbogens 47a, 47b des ersten 30, beziehungsweise zweiten Führungsabschnitts 31. Der fiktive Kreisbogen 47a, 47b erstreckt sich jeweils zwischen der ersten Anschlagsfläche 30b, 31b und der zweiten Anschlagsfläche 30c, 31c. Das Verriegelungselement 42 greift in die mittige Ausnehmung 46 an dem äußeren Bereich 34 ein und arretiert somit diese erste Schwenkposition 12a. In dieser ersten Schwenkposition 12a ist das zumindest eine Rahmenelement 2, 2a, 2b in der Regel im Wesentlichen senkrecht zu der ersten fiktiven Ebene 13 und befindet sich somit in einer Verstauposition. In der Figur 17a ist in zwei Ansichten das zumindest eine Rahmenelement 2, 2a, 2b in der ersten Schwenkposition 12a dargestellt. In der oberen Ansicht wurde der erste Bedienabschnitt 39c des Bedienelements 39 betätigt und somit radial nach innen in den ersten Ausnahmebereich 38c des Halteelements 38 verlagert. In der unteren Ansicht wurde der zweite Bedienabschnitt 39d betätigt und somit radial nach innen in den zweiten Ausnahmebereich 38d des Halteelements 38 verlagert. Der Eingriff des Verriegelungselements 42 aus der Ausnehmung 46 ist somit gelöst und das zumindest eine Rahmenelement 2, 2a, 2b kann in die gewünschte Schwenkposition geschwenkt werden.

In der Figur 17b befindet sich das zumindest ein Rahmenelement 2, 2a, 2b in der zweiten Schwenkposition 12b. Der erste Führungsvorsprung 32a des zumindest einen Rahmenelements 2, 2a, 2b liegt an der ersten Anschlagsfläche 30a des ersten Führungsabschnitts 30 an. Der zweite Führungsvorsprung 32b des zumindest einen Rahmenelements 2, 2a, 2b liegt an der zweiten Anschlagsfläche 31b des zweiten Führungsabschnitts 31 an. Die auf das zumindest eine Rahmenelement 2, 2a, 2b einwirkenden Kräfte durch den Nutzer werden durch diese Anschläge 30a, 31b von dem zumindest einem Rahmenelement 2, 2a, 2b in die Lagerungsachse 22 und somit in die Befestigungseinrichtung 5 geleitet. Das zumindest eine Rahmenelement 2, 2a, 2b ist in dieser Schwenkposition 12b arretiert, da das Verriegelungselement 42 der Arretierungsvorrichtung 29 in die entsprechende Ausnehmung 46, welche dieser Schwenkposition 12b zugeordnet ist, an der Lagerungsachse 22 eingreift.

In der Figur 17c befindet sich das zumindest ein Rahmenelement 2, 2a, 2b in der dritten Schwenkposition 12c. Der erste Führungsvorsprung 32a des zumindest einen Rahmenelements 2, 2a, 2b liegt an der zweiten Anschlagsflache 30b des ersten Führungsabschnitts 30 an. Der zweite Führungsvorsprung 32b des zumindest einen Rahmenelements 2, 2a, 2b liegt an der ersten Anschlagsflache 31a des zweiten Führungsabschnitts 31 an. Die auf das zumindest eine Rahmenelement 2, 2a, 2b einwirkenden Kräfte durch den Nutzer werden durch diese Anschläge 30b, 31a von dem zumindest einem Rahmenelement 2, 2a, 2b in die Lagerungsachse 22 und somit in die Befestigungseinrichtung 5 geleitet. Das zumindest eine Rahmenelement 2, 2a, 2b ist in dieser Schwenkposition 12c arretiert, da das Verriegelungselement 42 der Arretierungsvorrichtung 29 in die entsprechende Ausnehmung 46, welche dieser Schwenkposition 12c zugeordnet ist, an der Lagerungsachse 22 eingreift.

Demnach sind die Neigungswinkel α, β durch die Länge der fiktiven Kreisbogen 47a, 47b vorgegeben. Ferner ist es denkbar, dass das Bedienelement 39 an einer unterschiedlichen Position des zumindest einen Rahmenelements 2, 2a, 2b angeordnet ist. Das Bedienelement 39 könnte beispielsweise auch an dem oberen Abschnitt 8 des zumindest einen Rahmenelements 2, 2a, 2b angeordnet sein. Ferner könnte ein Griffelement 16 vorgesehen sein, welches an dem oberen Abschnitt 8 angeordnet ist Das Bedienelement 39 könnte in dem Griffelement 16 integriert sein. Bei einer derartigen Ausgestaltung kann die eingangs beschriebene Funktionsweise zur Betätigung des Verriegelungselements 42 beibehalten werden. Die oben beschriebene (Hebel-)kraft, welche auf die Achse 41 wirkt, könnte mittels einer Übertragungseinrichtung von dem Bedienelement 39 auf die Achse 41 übertragen werden. Eine solche (mechanische) Übertragungseinrichtung könnte beispielsweise ein Bowdenzug, eine Betätigungsstange oder Übertragungseinrichtung mittels Zahnrädern sein. Diese Übertragungseinrichtungen können vorzugsweise in oder an dem zumindest einem Rahmenelement 2, 2a, 2b angeordnet sein. Denkbar wäre jedoch auch, dass die Übertagungseinrichtung elektrische Signale überträgt, welche einen Stellantrieb steuern. Der Stellantrieb betätigt dann das Verriegelungselement 42.

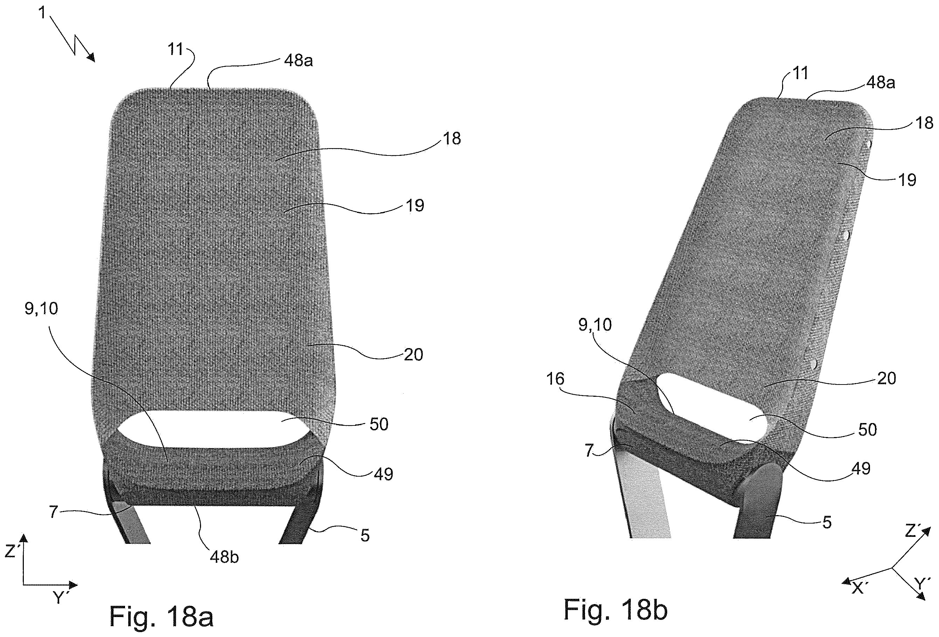

An oder in dem zumindest einen Rahmenelement 2, 2a, 2b ist ein Sitzbezug 18 angeordnet. Der Sitzbezug 18 ist in oder über der Innenfläche 28, welche von dem Rahmenelement 2, 2a, 2b, beziehungsweise dem oberen Abschnitt 8 und dem unteren Abschnitt 7 eingeschlossen ist. Ist das zumindest eine Rahmenelement 2, 2a, 2b einteilig oder einstückig ausgestaltet, kann der Sitzbezug 18 schlauchartig ausgestaltet sein. Vorteilhafterweise könnte demnach jeweils ein Abschnitt des schlauchartigen Sitzbezugs 18 auf jeder Seite über der Innenfläche 28 angeordnet sein. Dies ist beispielsweise in den Figuren 18a und 18b erkennbar. Der schlauchartige Sitzbezug 18 umfasst eine erste, entlang der Höhenachse Z` obere Öffnungsseite 48a, welche vorzugsweise mittels einer Naht verschlossen ist und an dem dritten Querabschnitt 11 anliegt. Ferner umfasst der schlauchartige Sitzbezug 18 eine zweite, entlang der Höhenachse Z` untere Öffnungsseite 48b, welche vorzugsweise mittels eines öffenbaren Verschlusses verschlossen ist und auf oder an dem unteren Abschnitt 7 liegt.

Bei einer zweiteiligen Ausgestaltung des zumindest einen Rahmenelements 2, 2a, 2b kann ein flächig ausgebildeter Sitzbezug 18 verwendet werden. Dies ist in den Figuren 1a bis 2b und 5 bis 12d angedeutet. Der Sitzbezug 18 ist randseitig von unten nach oben mit dem zumindest einem Rahmenelement 2, 2a, 2b verbunden. Der Sitzbezug 18 ist dabei mit den beiden Strebenelementen 27 und dem dritten Querabschnitt 11 verbunden. Hierzu kann beispielsweise eine Kederschiene an der Innenseite der beiden Strebenelemente 27 und des dritten Querabschnitts 11 angeordnet sein. Die Kederschiene ist an einer Innenseite des zumindest einen Rahmenelements 2, 2a, 2b vorgesehen und somit der Innenfläche 28 zugewandt. Der Sitzbezug 18 weist eine Kederfahne auf, welche in der Kederschiene angeordnet, beziehungsweise eingespannt wird.

Vorteilhafterweise ist der Sitzbezug 18 ein Gestrick und weist zumindest zwei Bereiche 19, 20 auf, welche unterschiedliche Elastizitäten aufweisen. Ein erster Bereich 19 weist eine geringere Elastizität auf als der zweite Bereich 20. Der zweite Bereich 20 ist durch eine Krafteinwirkung elastisch verformbar. Der erste Bereich 19 ist entlang der Höhenachse Z` über dem zweiten Bereich 20 angeordnet. Ein solcher erster Bereich 19 kann somit dafür vorgesehen und geeignet sein, einen Schulterbereich des Nutzers abzustützen. Der zweiter Bereich 20, welcher eine höhere Elastizität aufweist, kann dann in oder über einem entlang der Höhenachse Z` mittleren und/oder unteren Abschnitt der Innenfläche 28 angeordnet sein. Ein solcher zweiter Bereich 20 kann dafür vorgesehen und geeignet sein, den unteren Rücken und die Glutealregion des Nutzers abzustützen. Denkbar wäre natürlich auch noch, weitere Bereiche mit unterschiedlichen Elastizitäten in dem Sitzbezug vorzusehen.

Weiterhin ist der Sitzbezug 18 mit dem zumindest einem Rahmenelement 2, 2a, 2b randseitig von unten nach oben verbunden. Durch eine Krafteinwirkung bildet der zweite Bereich 20 eine dreidimensionale Verformung 21, beziehungsweise Auswölbung. Dies ist in Figur 3 schematisch dargestellt. Diese Krafteinwirkung erfolgt durch das Anlehnen des Nutzers. Demnach wird bei einer Verschwenkung von der zweiten in die dritte Schwenkposition oder umgekehrt die Krafteinwirkung in entgegengesetzter Richtung erfolgen, wodurch die dreidimensionale Verformung sich ebenfalls in entgegengesetzter Richtung ausbilden wird.

Der Sitzbezug 18 kann einen dritten Bereich 49 aufweisen, welcher entlang der Höhenachse Z` unterhalb des zweiten Bereichs angeordnet ist. Dieser dritte Bereich 49 kann mit dem zumindest einen Rahmenelement 2, 2a, 2b mittels einer bevorzugt lösbaren Verbindung verbunden sein. Der dritten Bereich 49 kann sich auf dem ersten 9 und dem zweiten Querabschnitt 10 angeordnet sein und als Sitzpolsterung dienen. Dies ist beispielsweise in den Figuren 18a und 18b dargestellt. Der Sitzbezug 18 kann auch einen Zwischenraum oder Aussparung 50 aufweisen. Der dritten Bereich 49 und der zweite Bereich 20 sind demnach lediglich über stegartige Abschnitte verbunden, welche an den Strebenelementen 27 des zumindest einen Rahmenelements 2, 2a, 2b angeordnet sind. Alternativ geht der zweite Bereich 20 in den dritten Bereich 49 ohne Unterbrechung über. Dies ist beispielsweise in der Figur 5 dargestellt. Die effektive Sitzfläche umfasst demnach ebenso den Übergang zwischen dem dritten 49 und dem zweiten Bereich 20. Ebenso kann die effektive Sitzfläche auch einen Abschnitt des zweiten Bereichs 20 des Sitzbezugs 18 umfassen.

Die effektive Sitzfläche für den Nutzer ist somit vorteilhafterweise der Sitzbereich 4, 4a, 4b des Rahmenelements und ein unterer Abschnitt des Sitzbezugs18, welcher die Auswölbung ausformt, beziehungsweise der dritte Bereich 49 des Sitzbezugs 18, welcher als Polster dient.

An dem zumindest einem Rahmenelement ist weiterhin zumindest ein Griffelement 16 an zumindest einem Strebenelement 27, beziehungsweise dem oberen Abschnitt 8 angeordnet. Typischerweise ist das Griffelement an einer Außenseite der Sitzanordnung 1 angeordnet, welche an einem Durchgang des Transportmittels liegt. Sind zwei Durchgänge vorgesehen, können selbstverständlich auch an jeder Außenseite der Sitzanordnung 1 ein Griffelement 16 vorgesehen sein.

In den Figuren 1a bis 2b und 4 ist eine Sitzanordnung 1 mit lediglich einem Rahmenelement 2 dargestellt. Die Befestigungseinrichtung 5 umfasst zwei Armelemente 25, 25a, 25b, welche sich sich entlang der Höhenachse Z erstrecken und in einem Basiselement 26 münden. Ausgehend von dem Basiselement 26 erstrecken sich die Armelemente 25, 26 ebenso entlang der Breitenachse Y, so dass sie schräg nach oben verlaufen. Ein Abstand 53 zwischen dem ersten Armelement 25a und dem zweiten Armelement 25b nimmt entlang der Höhenachse Z nach unten hin ab. An einem oberen Ende weisen die Armelemente 25, 25a, 25b jeweils die Aufnahmeeinrichtungen 23, 23a, 23b für die Lagerungsachse 22 auf. Die Aufnahmeeinrichtungen 23, 23a, 23b können mit dem Armelement einteilig, einstückig oder mehrteilig ausgebildet sein. In einem Übergangsbereich, welcher zu den Aufnahmeeinrichtungen 23, 23a, 23b führt, sind die Armelemente 25, 25a, 25b vorteilhafterweise im Wesentlichen parallel zu der Höhenachse Z orientiert. Die Armelemente 25, 25a, 25b können als Flachprofil ausgestaltet sein. In diesem Flachprofil kann eine bevorzugt kreisförmige Ausnehmung die Aufnahmeeinrichtungen 23, 23a, 23b ausbilden. Ferner können die Aufnahmeeinrichtungen 23, 23a, 23b im Wesentlichen zylinderförmig mit einem bevorzugt kreisförmigen Querschnitt ausgebildet sein. Das Basiselement 26 hat eine geringere Erstreckung entlang der Breitenachse Y als die Lagerungsachse 22, beziehungsweise als der Abstand zwischen den Aufnahmeeinrichtungen 23, 23a, 23b. Ferner ist an den Seiten der Aufnahmeeinrichtung 23, 23a, 23b jeweils ein Deckelelement 51 vorgesehen. Die Armelemente können im Wesentlichen geradlinig, beziehungsweise V-förmig verlaufen, wie in den Figuren 1a bis 2b und 4 dargestellt. Denkbar ist jedoch auch ein annähernd S-förmiger Verlauf der Armelemente 25, 25a, 25b.

Das Basiselement 26 ist entweder direkt an dem Boden 102 des Transportmittels 101 befestigt oder über eine Führungsvorrichtung verlagerbar an dem Boden 102 des Transportmittel 101 angeordnet. Eine solche Ausgestaltung hat den Vorteil, dass das Basiselement mittig unter dem zumindest einem Rahmenelement 2, 2a, 2b angeordnet ist. Es kann somit eine symmetrische Krafteinleitung in das Basiselement 26 erfolgen. Hierdurch wird ermöglicht, dass das Führungssystem einfacher ausgestaltet werden kann. Wird beispielsweise ein Schienensystem als Führungssystem verwendet, ist es ausreichend, dass nur eine Schiene verwendet wird. In den Figuren 1a und 1b ist eine Befestigungseinrichtung 5 vorgesehen, welche eine geringere Höhe aufweist. Das Basiselement 26 ist lediglich als eine sich entlang der Breitenachse Y erstreckende Querverstrebung ausgebildet. Derartige Sitzanordnungen 1 könnten beispielsweise von Senioren oder Kindern benutzt werden. In den Figuren 2a und 2b ist eine Sitzanordnung 1 mit einer Sitzhöhe für Erwachsene dargestellt. Das Basiselement 26 ist als ein im Wesentlichen rechteckförmiges Element ausgebildet, welches zwei sich entlang der Breitenachse Y erstreckende Querverstrebungen umfasst. Die entlang der Höhenachse Z obere Querverstrebung ist dabei als Fußstütze 52 angedacht. Denkbar wäre auch, dass eine Drehvorrichtung an oder in dem Basiselement 26 angeordnet, beziehungsweise integriert ist. Die Befestigungseinrichtung 5, beziehungsweise die Sitzanordnung 1 könnten dann um eine Rotationsachse 54, welche parallel zur Höhenachse Z verläuft rotiert werden. Dies ist in den Figuren 1b, 2b und 3 durch den Doppelpfeil 55 angedeutet.

Die Ausführungsformen gemäß den Figuren 5 bis 13 zeigen eine Sitzanordnung 1 mit zwei Rahmenelementen 2, 2a, 2b, welche an der Befestigungseinrichtung 5 angeordnet sind. Die beiden Rahmenelemente 2, 2a, 2b sind entlang der Breitenachse Y nebeneinander angeordnet. Wie bereits beschrieben, sind die beiden Rahmenelemente 2, 2a, 2b unabhängig voneinander, um eine gemeinsame sich entlang einer Breitenachse Y erstreckende Schwenkachse 6 relativ zu der Befestigungseinrichtung 5 um die Neigungswinkel α, β in die erste, zweite und dritte Schwenkposition 12a, 12b, 12c verschwenkbar. Die Befestigungseinrichtung 5 kann auf unterschiedliche Weise ausgestaltet sein. Bei allen Ausführungsformen ist eine Lagerungsachse 22 vorgesehen, welche sich entlang der Sitzanordnung erstreckt und durch die jeweiligen Durchgangskanäle 24 der beiden Rahmenelemente 2, 2a, 2b erstreckt. Wie bereits beschrieben, kann sich ein solcher Durchgangskanal 24 im Wesentlichen über die gesamte Breitenerstreckung eines Rahmelements 2, 2a, 2b erstrecken. Denkbar wäre auch eine lediglich teilweise Erstreckung oder nur teilweise. An jedem der beiden Rahmenelemente 2, 2a, 2b ist auch eine Arretierungsvorrichtung 29 vorgesehen. Die Lagerungsachse 22 wird in zwei Aufnahmeeinrichtungen 23, 23a, 23b der Befestigungseinrichtung 5 aufgenommen. In Figur 13 ist eine Explosionsdarstellung der Sitzanordnung analog zu der Figur 4 dargestellt. Allerdings sind in der Figur 13 nur 3 mögliche Ausgestaltungen der Befestigungseinrichtung 5 dargestellt. Selbstverständlich könnten auch die weiteren gezeigten Befestigungseinrichtungen 5 in der Figur 13 eingefügt werden. In diesen Ausführungsformen kann auch zumindest ein Deckelelement 51 zum Abschluss der Lagerungsachse 22 vorgesehen sein.

Nach den Ausführungsformen gemäß den Figuren 5 bis 11d ist eine erste Aufnahmeeinrichtung 23a zwischen dem ersten Rahmenelement 2a und dem zweiten Rahmenelement 2b angeordnet. Eine weitere zweite Aufnahmeeinrichtung 23b ist seitlich von einem der beiden Rahmenelemente 2a, 2b, beziehungsweise an einer der beiden Außenseiten der Sitzanordnung 1 angeordnet. Die beiden Aufnahmeeinrichtung 23, 23a, 23b sind dabei im Wesentlichen zylinderförmig mit einem im Wesentlichen kreisförmigen Querschnitt ausgebildet.

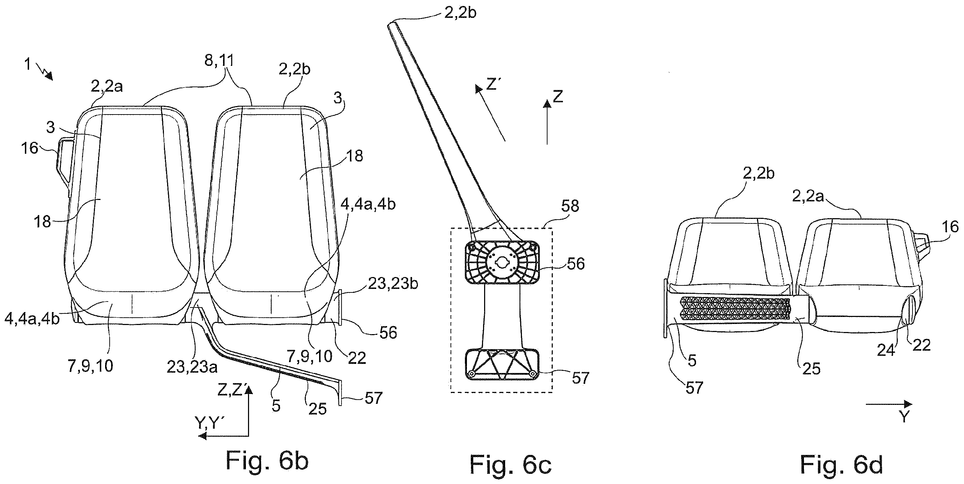

Nach der Ausführungsform gemäß den Figuren 5 bis 6d ist zweite Aufnahmeeinrichtung 23b an einem plattenartig ausgebildeten ersten Befestigungselement 56 angeordnet, welches an einem Wandelement des Transportmittels 101 befestigt werden kann. Das erste Befestigungselement 56 ist demnach in einer Befestigungsebene 58 (siehe Figur 6c) angeordnet, welche sich im Wesentlichen parallel zu der zweiten fiktiven Ebene 14 sich erstreckt. Vorteilhafterweise umfasst das Wandelement des Transportmittels 101 die Befestigungsebene 58. Die erste Aufnahmeeinrichtung 23a ist an einem Armelement 25 angeordnet sein. Dieses Armelement 25 ist als Kragarm oder Cantilever ausgestaltet sein. Das Armelement 25 erstreckt sich demnach ausgehend von der ersten Aufnahmeeinrichtung 23a hin zu der Befestigungsebene 58 und mündet in einem zweiten Befestigungselement 57, welches ebenso in der Befestigungsebene 58 angeordnet ist und an dem Wandelement des Transportmittel anordenbar ist. Ausgehend von dem zweiten Befestigungselement 57d erstreckt sich ein unterer auskragender Abschnitt des Armelement 25 schräg entlang der Höhenachse Z nach oben. Der untere auskragender Abschnitt schließt einen Winkel mit der ersten fiktiven Ebene 13 ein, welcher in einem Bereich zwischen 10° und 45° liegt. Ein an den unteren Abschnitt anschließender oberer Abschnitt des Armelements 25 schließt einen Winkel mit der ersten fiktiven Ebene 13 ein, welcher in einem in einem Bereich zwischen 45° und 90° liegt. In der Figur 5 ist eine perspektivische Ansicht dieser Ausführungsform dargestellt. Figur 6a zeigt eine Vorderansicht und Figur 6b eine Rückansicht dieser Ausführungsform. In Figur 6c ist eine Seitenansicht und in Figur 6d eine Ansicht von unten dieser Ausführungsform dargestellt.

Die Ausführungsform nach den Figuren 11a bis 11d ist analog zu der Ausführungsform gemäß den Figuren 5 bis 6d. Der einzige Unterschied ist, dass lediglich ein Befestigungselement 59 vorgesehen ist. Dieses dritte Befestigungselement 59 erstreckt sich ebenso in der Befestigungsebene 58. Ferner ist die zweite Aufnahmeeinrichtung 23b an diesem dritten Befestigungselement 59 angeordnet. Ebenso mündet das Armelement 25 in dem dritten Befestigungselement 59.

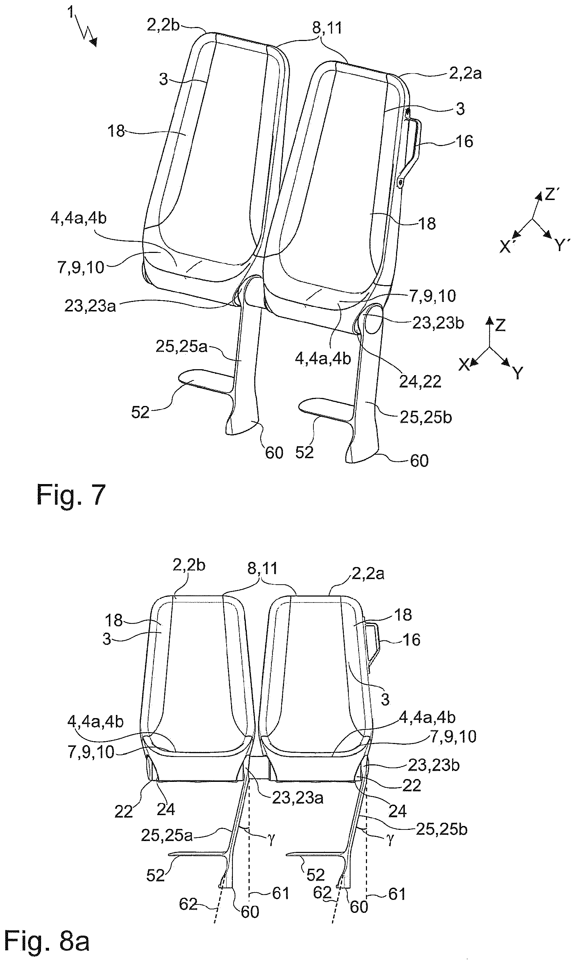

In den Ausführungsformen nach den Figuren 7 bis 10d sind zwei Armelemente 25, 25a, 25b vorgesehen, an welchen die Aufnahmeeinrichtungen 23, 23a, 23b angeordnet beziehungsweise integriert sind. Dabei zeigt Figur 7 eine perspektivische Ansicht einer ersten Ausführungsform.

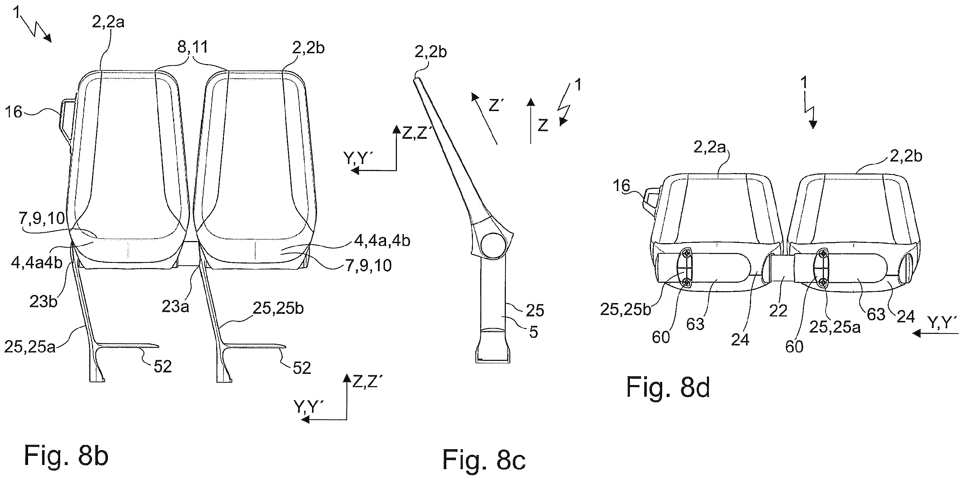

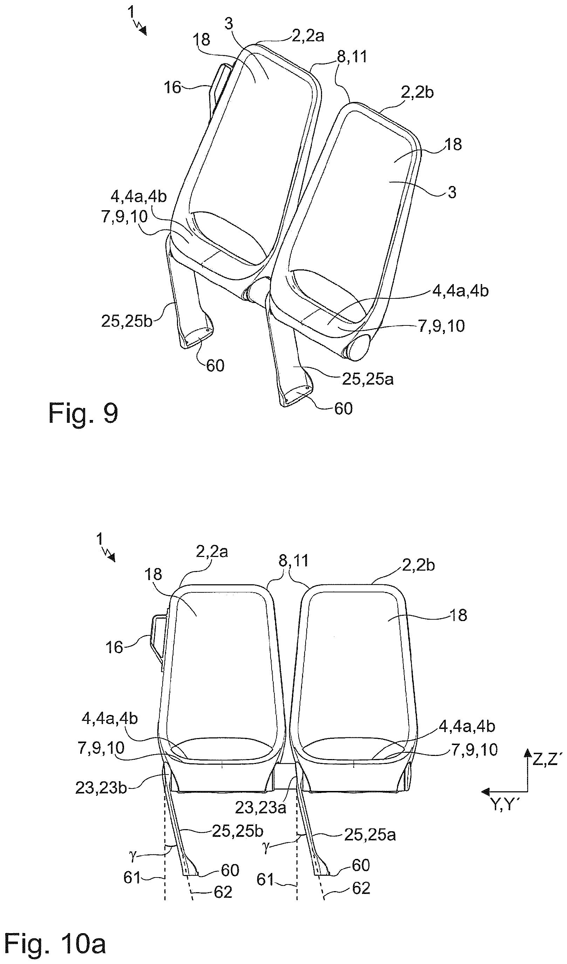

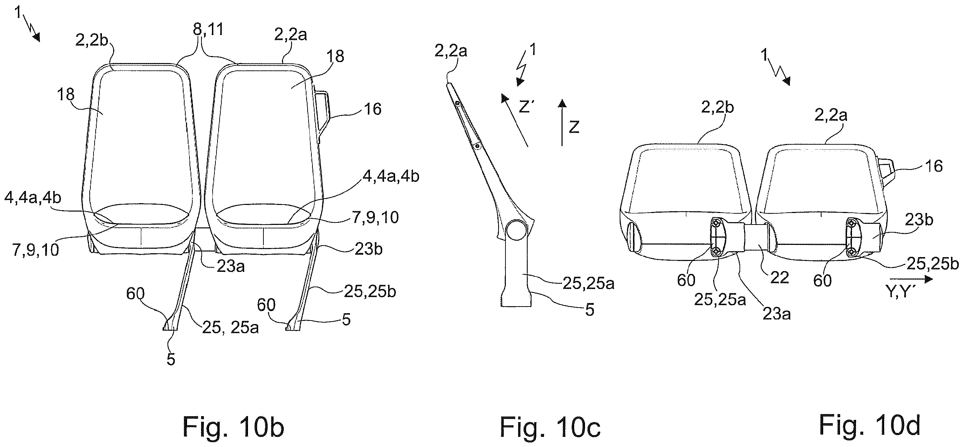

Figur 8a zeigt eine Vorderansicht und Figur 8b eine Rückansicht dieser ersten Ausführungsform. In Figur 8c ist eine Seitenansicht und in Figur 8d eine Ansicht von unten dieser ersten Ausführungsform dargestellt. In Figur 9 ist eine perspektivische Ansicht einer zweiten Ausführungsform gezeigt. Figur 10a zeigt eine Vorderansicht und Figur 10b eine Rückansicht dieser zweiten Ausführungsform. In Figur 10c ist eine Seitenansicht und in Figur 10d eine Ansicht von unten dieser zweiten Ausführungsform dargestellt.

Bei diesen Ausführungsformen nach den Figuren 7 bis 10d sind beide Armelemente 25, 25a, 25b als Flachprofile ausgebildet und an dem Boden der Transportmittels 101 fixierbar. Hierzu ist an dem jeweiligen Armelement 25, 25a, 25b ein Befestigungsbereich 60 ausgebildet, welcher einen zum Boden des Transportmittels parallelen Abschnitt aufweist. In diesem Abschnitt können Bohrungen vorgesehen sein, mittels welchen die Befestigung beispielsweise durch eine Schraubverbindung ermöglicht wird. Die beiden Armelemente 25, 25a, 25b sind bezüglich einer Referenzachse 61, welche senkrecht zu der fiktiven ersten Ebene 13 verläuft, geneigt. Zwischen dieser Referenzachse 61 und einer Mittelachse 62 der Armelemente 25, 25a, 25b kann somit ein Neigungswinkel γ definiert werden. Dies ist beispielhaft in den Figuren 8a und 9a gezeigt. Der Neigungswinkel γ liegt in einem Bereich zischen 5° und 20°, bevorzugt in einem Bereich zwischen 10° und 15°.

Die zweite Aufnahmeeinrichtung 23b und das damit verbundene zweite Armelement 25b sind vorteilhafterweise an einer Außenseite der Sitzanordnung 1 vorgesehen, an welcher auch ein Griffelement 16 an dem entsprechenden Rahmenelement 2, 2a, 2b vorgesehen ist. Hierdurch können die durch das eine Griffelement 16 in die Sitzanordnung 1 eingebrachten Kräfte effektiv über das zweite Armelement 25a abgeleitet werden. Die Sitzanordnung 1 weist demnach eine vorteilhafte erhöhte Stabilität an der Außenseite der Sitzanordnung 1 auf.

Wie bei allen vorgestellten Ausführungsformen können die Armelemente 25, 25a, 25b und die zugehörigen Aufnahmeeinrichtungen 23, 23a, 23b einteilig, einstückig oder mehrteilig ausgestaltet sein. Ebenso können die Durchgangskanäle 24 sich im Wesentlichen über die gesamte Breite des Rahmenelements 2, 2a, 2b erstrecken oder nur abschnittsweise. In Figur 8d ist beispielsweise erkennbar, dass der Durchgangskanal 24 sich nur abschnittsweise entlang der Breitenachse Y` erstreckt. Die beiden Aufnahmeeinrichtungen 23, 23a, 23b umfassen hier ein Verlängerungselement 63, welches sich entlang der Breitenachsee Y` der Rahmenelemente 2, 2a,2b erstreckt. Die Aufnahmeeinrichtungen 23, 23a, 23b und das entsprechende Verlängerungselement 63 können einstückig, einteilig oder mehrteilig ausgebildet sein. Das zu der ersten Aufnahmeeinrichtung 23a zugehörige Verlängerungselement erstreckt sich ausgehend von dem zwischen den Rahmenelementen 2, 2a, 2b bestehenden Zwischenraum entlang des zweiten Rahmenelements 2b. Das zu der ersten Aufnahmeeinrichtung 23a zugehörige Verlängerungselement erstreckt sich ausgehend von der Außenseite zu dem zwischen den Rahmenelementen 2, 2a, 2b bestehenden Zwischenraum entlang des ersten Rahmenelements 2a. Im Gegensatz dazu erstreckt sich der Durchgangskanal 24 nach der Ausführungsform gemäß Figur 10d über einen wesentlichen Abschnitt der Breitenrichtung der Rahmenelemente 2, 2a, 2b. Unter einen wesentlichen Abschnitt ist zumindest die Hälfte bevorzugt drei Viertel der gesamten Breitenerstreckung des Rahmenelements 2, 2a, 2b zu verstehen.

Bei der Ausführungsform nach den Figuren 7 bis 8d ist eine Fußstütze 52, beziehungsweise ein Fußauflageelement an jedem Armelement 25, 25a, 25b vorgesehen. Diese Fußstütze 52 erstreckt sich ausgehend von dem jeweiligen Armelement 25, 25a, 25b im Wesentlichen parallel zu der ersten fiktiven Ebenes 13, beziehungsweise dem Boden des Transportmittels.

Nach einer Ausführungsform gemäß den Figuren 12a bis 12d sind die erste Aufnahmeeinrichtungen 23, 23a, und die zweite Aufnahmeeinrichtungen 23, 23b der Befestigungseinrichtung 5 an den Außenseiten der Sitzanordnung 1 angeordnet. Die beiden Rahmenelemente 2, 2a, 2b sind somit zwischen den Aufnahmeeinrichtungen 23, 23a, 23b angeordnet. Zwischen den beiden Rahmenelementen 2, 2a, 2b ist lediglich ein vorzugsweise hülsenförmiges Abstandselement 64 vorgesehen. Diese Befestigungseinrichtung 5 ist analog zu der Befestigungseinrichtung gemäß den Figuren 2a und 2b ausgebildet. Die entsprechende Beschreibung ist somit analog. Die beiden S-förmig oder V-förmig verlaufenden Armelemente 25, 25a, 25b münden ebenso in einem Basiselement 26. Es kann somit ebenso eine vorteilhafte symmetrische Krafteinleitung in das Basiselement 26 erfolgen. Ferner kann analog eine Dreheinrichtung vorgesehen sein, mittels welcher eine Drehung der Sitzanordnung 1 um eine Rotationsachse 54 erfolgen kann.

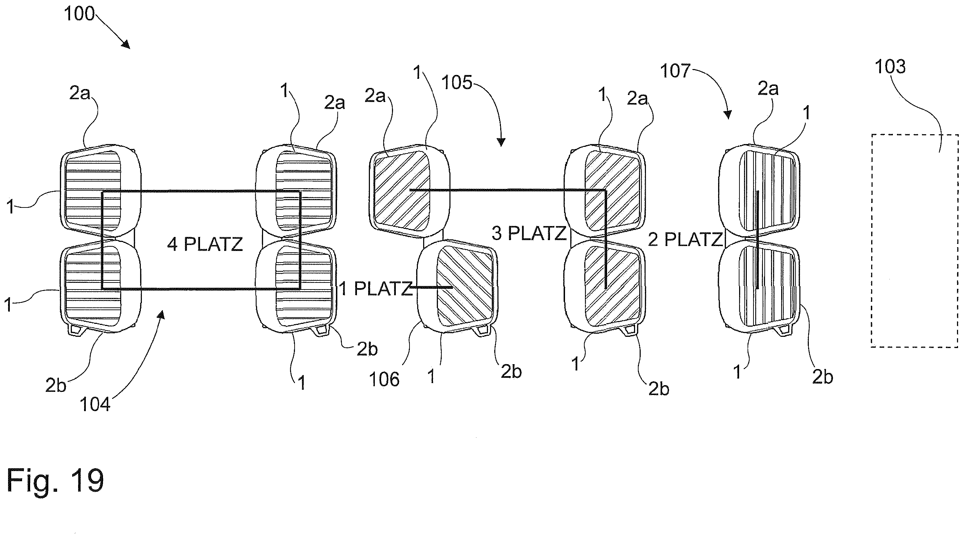

In den Figur 19 ist eine Inneneinrichtung 100 für ein Transportmittel 101 dargestellt. Diese Inneneinrichtung 100 umfasst eine Mehrzahl an Sitzanordnungen 1. Diese Sitzanordnungen 1 sind am Boden des Transportmittels 101 fest fixiert oder mit in einem Führungssystem (nicht dargestellt) geführt. Dieses Führungssystem kann beispielsweise eine Schieneneinrichtung sein und ist vorzugsweise an dem Boden des Transportmittels 101 angeordnet. Alternativ könnte ein Führungssystem an einem Wandelement des Transportmittels 101 vorgesehen sein. Eine bestimmte Anzahl an Sitzanordnungen 1 könnte somit zunächst in einem Verstaubereich 103 des Transportmittels 101 aufbewahrt werden. Je nach Bedarf kann die benötigte Anzahl an Sitzanordnungen 1 aus dem Verstaubereich 103 entlang des Führungssystems in dem Innenraum des Transportmittels 101 verteilt werden. Dies kann manuell erfolgen oder auch durch einen Stellantrieb.

Diese Sitzgelegenheiten sollten hinsichtlich verschiedener Bedürfnisse modifizierbar sein. Solche Bedürfnisse sind beispielsweise die Anpassung der Sitzausrichtung bezüglich der Fahrrichtung oder die Anpassung von sich zugewandten Sitzgruppen. Bei vorhandenem Gepäck, beziehungsweise Sperrgepäck, können dementsprechend weniger Sitzanordnungen 1 aus dem Verstaubereich entnommen werden. Eine solche Inneneinrichtung 100 mit den Sitzanordnungen 1 kann im Vergleich zu eine bisherigen der Sitzbestuhlung über 25% mehr Sitzplätze bereitstellen. In der ersten Schwenkposition 12a, also der aufrechten Ausrichtung, nehmen die Sitzanordnungen 1 entlang der Tiefenachse X lediglich die Tiefe des Sitzabschnitts 4 des Rahmenelements 2, 2a, 2b ein. Die Sitzanordnungen 1 können demnach äußerst platzsparend aufbewahrt werden. Auch in der zweiten und dritten Schwenkposition 12b, 12c nehmen die Sitzanordnungen 1 einen erheblich geringeren Raumbedarf in einer Tiefenachse X auf. Der Raumbedarf in Tiefenrichtung wird bestimmt durch den Neigungswinkel α, β und den benötigten Fußraum. Der Nutzer nimmt in der Sitzanordnung 1 eine Sitzhaltung ein, welche annähernd einer Stehhaltung entspricht. Diese Sitzhaltung erfordert jedoch im Vergleich zur klassischen Sitzhaltung, in welcher die Beine annähernd rechtwinklig angewinkelt sind, einen wesentlich geringeren Raumbedarf.

Die Sitzanordnungen 1 ermöglichen vorteilhafterweise durch ihre Verschwenkbarkeit eine äußerst bequeme Anpassung der Sitzausrichtung. Hierdurch können auch Sitzgruppen einfach modifiziert werden. Dies ist beispielsweise in Figur 19 dargestellt. Die Sitzanordnungen 1 weisen jeweils zwei Rahmenelemente 2, 2a, 2b auf. Eine erste Sitzgruppe 104 ist eine Vierergruppe. Die beiden Rahmenelemente 2, 2a, 2b von zwei aufeinanderfolgenden Sitzanordnungen 1 sind derart geneigt, dass je zwei Nutzer einander zugewandt sind. Eine zweite Sitzgruppe 105 ist eine Dreiergruppe. Hier ist ein Rahmenelement 2a derart ausgerichtet, dass der Nutzer einer Sitzanordnung mit zwei Rahmenelementen 2a, 2b zugewandt ist. Das übrige Rahmenelement 2b wird als Einzelplatz 106 verwendet. In einer dritten Sitzgruppe 107 wird die Sitzanordnung 1 als Zweiersitz verwendet. Hier sind beide Rahmenelemente 2a, 2b in die gleiche Richtung geneigt, beziehungsweise ausgerichtet.

Die Anmelderin behält sich vor, sämtliche in den Anmeldungsunterlagen offenbarten Merkmale als vorteilhaft zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können

### Bezugszeichenliste

- 1: Sitzanordnung
- 2: Rahmenelement
- 2a: erstes Rahmenelement
- 2b: zweites Rahmenelement
- 3: oberer Bereich
- 4: Sitzbereich
- 4a: erster Sitzbereich
- 4b: zweiter Sitzbereich
- 5: Befestigungseinrichtung
- 6: Schwenkachse
- 7: unterer Abschnitt
- 8: oberer Abschnitt
- 9: erster Querabschnitt
- 10: zweiter Querabschnitt
- 11: dritter Querabschnitt
- 12a: erste Schwenkposition
- 12b: zweite Schwenkposition
- 12c: dritte Schwenkposition
- 13: erste fiktive Ebene
- 14: zweite fiktive Ebene
- 15: Doppelpfeil
- 16: Griffelement
- 17: Zusatzelement
- 18: Sitzbezug
- 19: erster Bereich des Sitzbezugs
- 20: zweiter Bereich des Sitzbezugs
- 21: dreidimensionale Verformung
- 22: Lagerungsachse
- 23: Aufnahmeeinrichtung
- 23a: erste Aufnahmeeinrichtung
- 23b: zweite Aufnahmeeinrichtung
- 24: Durchgangskanal
- 24a: Innenfläche des Durchgangskanals
- 25: Armelement
- 25a: erstes Armelement
- 25b: zweites Armelement
- 26: Basiselement
- 27: Strebenelemente
- 28: Innenfläche des Rahmenelements
- 29: Arretierungsvorrichtung
- 30: erster Führungsabschnitt
- 30a: Innenfläche des Führungsabschnitts
- 30b: erster Anschlagfläche
- 30c: zweiter Anschlagfläche
- 31: zweiter Führungsabschnitt
- 31a: Innenfläche des Führungsabschnitts
- 31b: erster Anschlagfläche
- 31c: zweiter Anschlagfläche
- 32a: erster Führungsvorsprung
- 32b: zweiter Führungsvorsprung
- 33: Mantelfläche
- 34: äußere Bereiche der Mantelfläche
- 35: Umfangsrichtung
- 36: Radius
- 37: Radius
- 38: Halteelement
- 38a: Öffnung des Halteelements
- 38b: Kragen
- 38c: erster Ausnahmebereich
- 38d: zweiter Ausnahmebereich
- 39: Bedienelement
- 39a: erster Auflageabschnitt
- 39b: zweiter Auflageabschnitt
- 39c: erster Bedienabschnitt
- 39d: zweiter Bedienabschnitt
- 40: Lagerungselemente
- 41: Achse
- 42: Verriegelungselement 4
- 43: Druckfeder
- 44: Umfangsrichtung
- 45: radiale Richtung
- 46: Ausnehmung
- 47: fiktiver Kreisbogen
- 48a: obere Öffnungsseite
- 48b: untere Öffnungsseite
- 49: dritter Bereich des Sitzbezugs
- 50: Aussparung des Sitzbezugs
- 51: Deckelelement
- 52: Fußstütze
- 53: Abstand
- 54: Rotationsachse
- 55: Doppelpfeil
- 56: erstes Befestigungselement
- 57: zweites Befestigungselement
- 58: Befestigungsebene
- 59: drittes Befestigungselement
- 60: Befestigungsbereich
- 61: Referenzachse
- 62: Mittelachse
- 63: Verlängerungselement
- 64: Abstandselement
- 100: Inneneinrichtung des Transportmittels
- 101: Transportmittel
- 102: Boden des Transportmittels
- 103: Verstaubereich
- 104: erste Sitzgruppe
- 105: zweite Sitzgruppe
- 106: Einzelsitz
- 107: dritte Sitzgruppe
- X: Tiefenachse der Sitzanordnung
- Y: Breitenachse der Sitzanordnung
- Z: Höhenachse der Sitzanordnung
- X': Tiefenachse des zumindest einen Rahmenelements
- Y`: Breitenachse des zumindest einen Rahmenelements
- Z': Höhenachse des zumindest einen Rahmenelements

## Patentansprüche

1. Sitzanordnung (1) für ein Transportmittel (101) insbesondere für ein Personentransportmittel, wobei die Sitzanordnung (1) mittels einer Befestigungseinrichtung (5) an dem Transportmittel (101) anordenbar ist, wobei die Sitzanordnung (1) zumindest ein Rahmenelement (2, 2a, 2b) mit einem oberen Bereich (3), welcher zur Abstützung des Rückens vorgesehen und geeignet ist, und zumindest einen Sitzbereich (4, 4a, 4b), welcher in dem zumindest einem Rahmenelement (2, 2a, 2b) integriert ist, umfasst,
**dadurch gekennzeichnet, dass**
zumindest eine Lagerungsachse (22) vorgesehen ist, mittels welcher das zumindest eine Rahmenelement (2, 2a, 2b) an der Befestigungseinrichtung (5) angeordnet ist, wobei lediglich eine Lagerungsachse (22) vorgesehen ist, wobei die Lagerungsachse (22) in zumindest einer Aufnahmeeinrichtung (23, 23a, 23b) der Befestigungseinrichtung (5) aufgenommen ist, wobei die Lagerungsachse (22) sich durch einen Durchgangskanal (24) des zumindest einen Rahmenelements (2, 2a, 2b) erstreckt, wobei die Lagerungsachse (22) drehfest mit der Befestigungseinrichtung (5) verbunden ist, wobei das zumindest eine Rahmenelement (2, 2a, 2b) relativ zu der Lagerungsachse (22) verschwenkbar angeordnet ist.

2. Sitzanordnung (1) nach Anspruch 1,
**dadurch gekennzeichnet, dass**
die Sitzanordnung (1) dafür vorgesehen und geeignet ist eine Sitzposition in Stehhöhe bereitzustellen, wobei der zumindest eine Sitzbereich (4, 4a, 4b) in einer Höhe zwischen 40 cm und 150 cm angeordnet ist.

3. Sitzanordnung (1) nach Anspruch 1 oder 2,
**dadurch gekennzeichnet, dass**
das zumindest eine Rahmenelement (2, 2a, 2b) durch einen unteren Abschnitt (7) und einen oberen Abschnitt (8) gebildet wird, wobei der untere Abschnitt (7) zumindest einen sich im Wesentlichen entlang einer Breitenachse (Y`, Y) erstreckenden ersten Querabschnitt (9) und einen sich im Wesentlichen entlang einer Breitenachse (Y`, Y) erstreckenden zweiten Querabschnitt (10) umfasst, wobei der obere Abschnitt (8) einen sich entlang der Breitenachse (Y`, Y) erstreckenden dritten Querabschnitt (11) umfasst, wobei der erste Querabschnitt (9) und der zweite Querabschnitt (10) eine vergrößerte Erstreckung entlang einer Tiefenachse (X`) aufweisen, wobei der erste Querabschnitt (9) oder der zweite Querabschnitt (10) zumindest abschnittsweise den Sitzbereich (4, 4a, 4b) ausbildet.

4. Sitzanordnung (1) nach einem der vorhergehenden Ansprüche,
**dadurch gekennzeichnet, dass**
das zumindest eine Rahmenelement (2, 2a, 2b) um eine sich entlang einer Breitenachse (Y) erstreckende Schwenkachse (6) relativ zu der Befestigungseinrichtung (5) verschwenkbar ist, wobei das zumindest eine Rahmenelement (2, 2a, 2b) in zumindest zwei Schwenkpositionen (12a, 12b, 12c) schwenkbar ist, wobei das zumindest eine Rahmenelement (2, 2a, 2b) in drei Schwenkpositionen (12a, 12b, 12c) schwenkbar ist, wobei das zumindest eine Rahmenelement (2, 2a, 2b) in eine erste Schwenkposition (12a) schwenkbar ist, wobei sich das zumindest eine Rahmenelement (2, 2a, 2b) in der ersten Schwenkposition (12a) im Wesentlichen senkrecht zu einer ersten fiktiven Ebene (13) erstreckt, welche sich parallel zu dem Boden (102) des Transportmittels (101) erstreckt, wobei das zumindest eine Rahmenelement (2, 2a, 2b) in eine zweite Schwenkposition (12b) schwenkbar ist, welche relativ zu der ersten Schwenkposition (12a) um einen Neigungswinkel (α) geneigt ist, wobei das zumindest eine Rahmenelement (2, 2a, 2b) in eine dritte Schwenkposition (12c) schwenkbar ist, welche relativ zu der ersten Schwenkposition (12a) um einen Neigungswinkel (β) geneigt ist, wobei das zumindest eine Rahmenelement (2, 2a, 2b) in der zweiten Schwenkposition (12b) und der dritten Schwenkposition (12c) in entlang einer Tiefenachse (X) entgegengesetzten Richtungen geneigt ist, wobei der Neigungswinkel (α) und der Neigungswinkel (β) den gleichen Betrag aufweisen.

5. Sitzanordnung (1) nach Anspruch 4,
**dadurch gekennzeichnet, dass**
eine Arretierungsvorrichtung (29) vorgesehen ist, mittels welcher das zumindest eine Rahmenelement (2, 2a, 2b) in zumindest einer Schwenkposition (12a, 12b, 12c) arretierbar ist, wobei eine Arretierungsvorrichtung (29) vorgesehen ist, mittels welcher das zumindest eine Rahmenelement (2, 2a, 2b) in der ersten Schwenkposition (12a), der zweiten Schwenkposition (12b) und der dritten Schwenkposition (122c) arretierbar ist.

6. Sitzanordnung (1) nach Anspruch 4,
**dadurch gekennzeichnet, dass**
in der zweiten Schwenkposition (12b) des zumindest einen Rahmenelements (2, 2a, 2b) ein erster Sitzbereich (4, 4a) zumindest durch den ersten Querabschnitt (9) gebildet ist, wobei in der dritten Schwenkposition (12c) des zumindest einen Rahmenelements (2, 2a, 2b) ein zweiter Sitzbereich (4, 4b) zumindest durch den zweiten Querabschnitt (10) gebildet ist, wobei in der zweiten Schwenkposition (12b) des zumindest einen Rahmenelements (2, 2a, 2b) der erste Sitzbereich (4, 4a) sich im Wesentlichen parallel zu der ersten fiktiven Ebene (13) erstreckt, wobei in der dritten Schwenkposition (12c) des zumindest einen Rahmenelements (2, 2a, 2b) der zweite Sitzbereich (4, 4b) sich im Wesentlichen parallel zu der ersten fiktiven Ebene (13) erstreckt.

7. Sitzanordnung (1) nach einem der Ansprüche 3 bis 6,
**dadurch gekennzeichnet, dass**
zumindest ein Zusatzelement (17) vorgesehen ist, welches an dem unteren Abschnitt (7) des zumindest einen Rahmenelements (2, 2a, 2b) angeordnet ist, wobei durch das zumindest eine Zusatzelement (17) die Tiefenerstreckung des Sitzbereichs (4, 4a, 4b) vergrößert wird.

8. Sitzanordnung (1) nach einem der vorhergehenden Ansprüche,
**dadurch gekennzeichnet, dass**
an oder in dem zumindest einen Rahmenelement (2, 2a, 2b) ein Sitzbezug (18) angeordnet ist, wobei der Sitzbezug (2, 2a, 2b) zumindest zwei Bereiche (19, 20) aufweist, welche unterschiedliche Elastizitäten aufweisen, wobei ein erster Bereich (19) eine geringere Elastizität aufweist als der zweite Bereich (20), wobei der zweite Bereich (20) durch eine Krafteinwirkung elastisch verformbar ist, wobei der erste Bereich (19) entlang der Höhenachse (Z`) über dem zweiten Bereich (20) angeordnet ist, wobei der Sitzbezug (18) mit dem zumindest einem Rahmenelement (2, 2a, 2b) randseitig von unten nach oben verbunden ist, wobei durch eine Krafteinwirkung der zweite Bereich (20) eine dreidimensionale Verformung (21) bildet, wobei der Sitzbezug (18) ein Gestrick ist.

9. Sitzanordnung (1) nach einem der vorhergehenden Ansprüche,
**dadurch gekennzeichnet, dass**
der untere Abschnitt (7) und der obere Abschnitt (8) des zumindest einen Rahmenelements (2, 2a, 2b) das zumindest eine Rahmenelement (2, 2a, 2b) einteilig, einstückig oder mehrteilig ausbilden.

10. Sitzanordnung (1) nach einem der Ansprüche 1 bis 9,
**dadurch gekennzeichnet, dass**
die Sitzanordnung(1) lediglich ein Rahmenelement (2) umfasst, welches an der Befestigungseinrichtung (5) angeordnet ist, wobei die Befestigungseinrichtung (5) zwei Armelemente (25, 25a, 25b) umfasst, welche in einem Basiselement (26) münden, wobei an jedem Armelement (25, 25a, 25b) eine Aufnahmeeinrichtung (23, 23a, 23b) für die Lagerungsachse (22) angeordnet ist.

11. Sitzanordnung (1) nach einem der Ansprüche, 1 bis 9
**dadurch gekennzeichnet, dass**
die Sitzanordnung (1) zwei Rahmenelemente (2, 2a, 2b) umfasst, welche an der Befestigungseinrichtung (5) angeordnet sind, wobei die beiden Rahmenelemente (2, 2a, 2b) entlang der Breitenachse (Y) nebeneinander angeordnet sind, wobei die beiden Rahmenelemente (2, 2a, 2b) unabhängig voneinander um eine gemeinsame sich entlang einer Breitenachse (Y) erstreckende Schwenkachse (6) relativ zu der Befestigungseinrichtung (5) verschwenkbar sind.

12. Sitzanordnung (1) nach Anspruch 11,
**dadurch gekennzeichnet, dass**
die Lagerungsachse (22) sich zumindest über die gesamte Breitenerstreckung der beiden Rahmenelemente (2, 2a, 2b) erstreckt, wobei die Lagerungsachse (22) in zumindest zwei Aufnahmeeinrichtungen (23, 23a, 23b) der Befestigungseinrichtung (5) aufgenommen ist, wobei eine erste Aufnahmeeinrichtung (23, 23a) zwischen den beiden Rahmenelementen (2a, 2b) angeordnet ist, wobei zumindest ein Armelement (25, 25a) vorgesehen ist, an welchem das erste Aufnahmeelement (23, 23a) angeordnet ist.

13. Inneneinrichtung (100) eines Transportmittels (101) insbesondere ein Personentransportmittel umfassend zumindest eine Sitzanordnung (1) nach einem der vorhergehenden Ansprüche.

14. Inneneinrichtung (100) nach Anspruch 13
**dadurch gekennzeichnet, dass**
die zumindest eine Sitzanordnung (1) ortsfest oder mittels einer Führungsvorrichtung (103) verlagerbar an dem Transportmittel (101) angeordnet ist.

## Claims

1. Seat arrangement (1) for a means of transport (101), in particular for a means of passenger transport, wherein the seat arrangement (1) can be arranged on the means of transport (101) by means of a fastening device (5),
wherein
the seat arrangement (1) comprises at least one frame element (2, 2a, 2b) with an upper region (3) which is provided and suitable for supporting the back and at least one seat region (4, 4a, 4b) which is integrated into the at least one frame element (2, 2a, 2b),
**characterised in that**
at least one mounting shaft (22) is provided, by means of which the at least one frame element (2, 2a, 2b) is arranged on the fastening device (5), wherein only one mounting shaft (22) is provided, wherein the mounting shaft (22) is received in at least one receiving device (23, 23a, 23b) of the fastening device (5), wherein the mounting shaft (22) extends through a through channel (24) of at least one frame element (2, 2a, 2b), wherein the mounting shaft (22) is non-rotatably connected to the fastening device (5), wherein the at least one frame element (2, 2a, 2b) is arranged to be pivotable relative to the mounting shaft (22).

2. Seat arrangement (1) according to claim 1,
**characterised in that**
the seat arrangement (1) is provided and suitable for providing a sitting position at standing height, wherein the at least one seat region (4, 4a, 4b) is arranged at a height between 40 cm and 150 cm.

3. Seat arrangement (1)) according to either claim 1 or 2,
**characterised in that**
the lower portion (7) and the upper portion (8) form the at least one frame element (2, 2a, 2b), wherein the lower portion (7) comprises at least one first transverse portion (9) extending substantially along a width axis (Y', Y) and one second transverse portion (10) extending substantially along a width axis (Y', Y), wherein the upper portion (8) comprises a third transverse portion (11) extending along the width axis (Y`, Y), wherein the first transverse portion (9) and the second transverse portion (10) have an enlarged extension along a depth axis (X`), wherein the first transverse portion (9) or the second transverse portion (10) forms the seat region (4, 4a, 4b), at least in portions.

4. Seat arrangement (1) according to one of the preceding claims,
**characterised in that**
the at least one frame element (2, 2a, 2b) can be pivoted relative to the fastening device (5) about a pivot axis (6) extending along a width axis (Y), wherein the at least one frame element (2, 2a, 2b) is pivotable into at least two pivoting positions (12a, 12b, 12c), wherein the at least one frame element (2, 2a, 2b) is pivotable into three pivoting positions (12a, 12b, 12c), wherein the at least one frame element (2, 2a, 2b) is pivotable into a first pivoting position (12a), wherein at least one frame element (2, 2a, 2b) extends substantially perpendicular to an imaginary plane (13) which extends parallel to the floor (102) of the means of transport (101) in the first pivoting position (12a), wherein at least one frame element (2, 2a, 2b) is pivotable into a second pivoting position (12b), which is inclined relative to the first pivoting position (12a) by an angle of inclination (α), wherein at least one frame element (2, 2a, 2b) is pivotable into a third pivoting position (12c), which is inclined relative to the first pivoting position (12a) by an angle of inclination (β), wherein at least one frame element (2, 2a, 2b) is inclined in directions opposite along a depth axis (X) in the second pivoting position (12b) and the third pivoting position (12c), wherein the angle of inclination (α) and the angle of inclination (β) preferably have the same amount.

5. Seat arrangement (1) according to claim 4,
**characterised in that**
a latching apparatus (29) is provided, by means of which at least one frame element (2, 2a, 2b) can be latched in at least one pivoting position (12a, 12b, 12c), wherein a latching apparatus (29) is provided by means of which at least one frame element (2, 2a, 2b) can be latched in the first pivoting position (12a), the second pivoting position (12b), and the third pivoting position (122c).

6. Seat arrangement (1) according to claim 4,
**characterised in that**
in the second pivoting position (12b) of the at least one frame element (2, 2a, 2b), a first seat region (4, 4a) is formed at least by the first transverse portion (9), wherein in the third pivoting position (12c) of the at least one frame element (2, 2a, 2b), a second seat region (4, 4b) is formed at least by the second transverse portion (10), wherein in the second pivoting position (12b) of the at least one frame element (2, 2a, 2b), the first seat region (4, 4a) extends substantially parallel to the first imaginary plane (13), wherein in the third pivoting position (12c) of the at least one frame element (2, 2a, 2b), the second seat region (4, 4b) extends substantially parallel to the first imaginary plane (13).

7. Seat arrangement (1) according to one of claims 3 to 6,
**characterised in that**
at least one additional element (17) is provided which is arranged on the lower portion (7) of the at least one frame element (2, 2a, 2b), wherein the at least one additional element (17) increases the depth of the seat region (4, 4a, 4b).

8. Seat arrangement (1) according to one of the preceding claims,
**characterised in that**
a seat cover (18) is arranged on or in the at least one frame element (2, 2a, 2b), wherein the seat cover (2, 2a, 2b) has at least two regions (19, 20) which have different elasticities, wherein a first region (19) has a lower elasticity than the second region (20), wherein the second region (20) is elastically deformable by the action of a force, wherein the first region (19) is arranged along the height axis (Z`) above the second region (20), wherein the seat cover (18) is connected with at least one frame element (2, 2a, 2b) at the edge from bottom to top, wherein the second region (20) forms a three-dimensional deformation (21) through the action of a force, wherein the seat cover (18) is a knitted fabric.

9. Seat arrangement (1) according to one of the preceding claims,
**characterised in that**
the lower portion (7) and the upper portion (8) of the at least one frame element (2, 2a, 2b) form the at least one frame element (2, 2a, 2b) integrally, in one piece, or in multiple pieces.

10. Seat arrangement (1) according to one of the claims 1 to 9,
**characterised in that**
the seat arrangement (1) only comprises a frame element (2) which is arranged on the fastening device (5), wherein the fastening device (5) comprises two arm elements (25, 25a, 25b) which open into a base element (26), wherein a receiving device (23, 23a, 23b) for the mounting shaft (22) is arranged on each arm element (25, 25a, 25b).

11. Seat arrangement (1) according to one of claims 1 to 9,
**characterised in that**
the seat arrangement (1) comprises two frame elements (2, 2a, 2b) which are arranged on the fastening device (5), wherein the two frame elements (2, 2a, 2b) are arranged next to one another along the width axis (Y), wherein the two frame elements (2, 2a, 2b) can be pivoted independently of one another about a common pivot axis (6) extending along a width axis (Y) relative to the fastening device (5).

12. Seat arrangement (1) according to claim 11,
**characterised in that**
the mounting shaft (22) extends at least over the entire width of the two frame elements (2, 2a, 2b), wherein the mounting shaft (22) is received in at least two receiving devices (23, 23a, 23b) of the fastening device (5), wherein a first receiving device (23, 23a) is arranged between the two frame elements (2a, 2b), wherein at least one arm element (25, 25a) is provided on which the first receiving element (23, 23a) is arranged.

13. Interior device (100) of a means of transport (101), in particular a means of passenger transport, comprising at least one seat arrangement (1) according to one of the preceding claims.

14. Interior device (100) according to claim 13,
**characterised in that**
at least one seat arrangement (1) is arranged on the means of transport (101) in a stationary manner or displaceable by means of a guide device (103).

## Revendications

1. Ensemble formant siège (1) pour un moyen de transport (101), en particulier pour un moyen de transport de personnes, l'ensemble formant siège (1) étant apte à être disposé sur le moyen de transport (101) au moyen d'un dispositif de fixation (5), l'ensemble formant siège (1) comportant au moins un élément cadre (2, 2a, 2b) avec une région supérieure (3), laquelle est prévue et adaptée pour supporter le dossier, et au moins une région de siège (4, 4a, 4b), laquelle est intégrée dans ledit au moins un élément cadre (2, 2a, 2b),
**caractérisé par le fait qu'**
au moins un axe de palier (22) est prévu, au moyen duquel ledit au moins un élément cadre (2, 2a, 2b) est disposé sur le dispositif de fixation (5), seulement un axe de palier (22) étant prévu, l'axe de palier (22) étant reçu dans au moins un dispositif de réception (23, 23a, 23b) du dispositif de fixation (5), l'axe de palier (22) s'étendant à travers un canal de passage (24) dudit au moins un élément cadre (2, 2a, 2b), l'axe de palier (22) étant relié au dispositif de fixation (5) de manière solidaire en rotation, ledit au moins un élément cadre (2, 2a, 2b) étant disposé de manière à pouvoir pivoter par rapport à l'axe de palier (22).

2. Ensemble formant siège (1) selon la revendication 1,
**caractérisé par le fait que**
l'ensemble formant siège (1) est prévu et adapté pour fournir une position de siège en station debout, ladite au moins une région de siège (4, 4a, 4b) étant disposée à une hauteur entre 40 cm et 150 cm.

3. Ensemble formant siège (1) selon l'une des revendications 1 ou 2,
**caractérisé par le fait que**
ledit au moins un élément cadre (2, 2a, 2b) est formé par une section inférieure (7) et une section supérieure (8), la section inférieure (7) comportant au moins une première section transversale (9) s'étendant sensiblement le long d'un axe de largeur (Y', Y) et une deuxième section transversale (10) s'étendant sensiblement le long d'un axe de largeur (Y', Y), la section supérieure (8) comportant une troisième section transversale (11) s'étendant le long de l'axe de largeur (Y', Y), la première section transversale (9) et la deuxième section transversale (10) présentant une étendue agrandie le long d'un axe de profondeur (X'), la première section transversale (9) ou la deuxième section transversale (10) formant au moins par sections la région de siège (4, 4a, 4b).

4. Ensemble formant siège (1) selon l'une des revendications précédentes,
**caractérisé par le fait que**
ledit au moins un élément cadre (2, 2a, 2b) est apte à pivoter autour d'un axe de pivotement (6) s'étendant le long d'un axe de largeur (Y) par rapport au dispositif de fixation (5), ledit au moins un élément cadre (2, 2a, 2b) étant apte à pivoter dans au moins deux positions de pivotement (12a, 12b, 12c), ledit au moins un élément cadre (2, 2a, 2b) étant apte à pivoter dans trois positions de pivotement (12a, 12b, 12c), ledit au moins un élément cadre (2, 2a, 2b) étant apte à pivoter dans une première position de pivotement (12a), ledit au moins un élément cadre (2, 2a, 2b) s'étendant, dans la première position de pivotement (12a), sensiblement perpendiculairement à un premier plan fictif (13), lequel s'étend parallèlement au plancher (102) du moyen de transport (101), ledit au moins un élément cadre (2, 2a, 2b) étant apte à pivoter dans une deuxième position de pivotement (12b), laquelle est inclinée d'un angle d'inclinaison (α) par rapport à la première position de pivotement (12a), ledit au moins un élément cadre (2, 2a, 2b) étant apte à pivoter dans une troisième position de pivotement (12c), laquelle est inclinée d'un angle d'inclinaison (β) par rapport à la première position de pivotement (12a), ledit au moins un élément cadre (2, 2a, 2b) étant incliné dans la deuxième position de pivotement (12b) et la troisième position de pivotement (12c) dans des directions opposées le long d'un axe de profondeur (X), l'angle d'inclinaison (α) et l'angle d'inclinaison (β) présentant la même valeur.

5. Ensemble formant siège (1) selon la revendication 4,
**caractérisé par le fait qu'**
un dispositif de blocage (29) est prévu, au moyen duquel ledit au moins un élément cadre (2, 2a, 2b) est apte à être bloqué dans au moins une position de pivotement (12a, 12b, 12c), un dispositif de blocage (29) étant prévu, au moyen duquel ledit au moins un élément cadre (2, 2a, 2b) est apte à être bloqué dans la première position de pivotement (12a), la deuxième position de pivotement (12b) et la troisième position de pivotement (122c).

6. Ensemble formant siège (1) selon la revendication 4,
**caractérisé par le fait que**
dans la deuxième position de pivotement (12b) dudit au moins un élément cadre (2, 2a, 2b), une première région de siège (4, 4a) est formée au moins par la première section transversale (9), où, dans la troisième position de pivotement (12c) dudit au moins un élément cadre (2, 2a, 2b), une deuxième région de siège (4, 4b) est formée au moins par la deuxième section transversale (10), où, dans la deuxième position de pivotement (12b) dudit au moins un élément cadre (2, 2a, 2b), la première région de siège (4, 4a) s'étend sensiblement parallèlement au premier plan fictif (13), où, dans la troisième position de pivotement (12c) dudit au moins un élément cadre (2, 2a, 2b), la deuxième région de siège (4, 4b) s'étend sensiblement parallèlement au premier plan fictif (13).

7. Ensemble formant siège (1) selon l'une des revendications 3 à 6,
**caractérisé par le fait qu'**
au moins un élément supplémentaire (17) est prévu, lequel est disposé sur la section inférieure (7) dudit au moins un élément cadre (2, 2a, 2b), où, l'étendue en profondeur de la région de siège (4, 4a, 4b) est augmentée par ledit au moins un élément supplémentaire (17).

8. Ensemble formant siège (1) selon l'une des revendications précédentes,
**caractérisé par le fait qu'**
un revêtement de siège (18) est disposé sur ou dans ledit au moins un élément cadre (2, 2a, 2b), le revêtement de siège (2, 2a, 2b) présentant au moins deux régions (19, 20), lesquelles présentent des élasticités différentes, une première région (19) présentant une élasticité plus faible que la deuxième région (20), la deuxième région (20) étant déformable élastiquement sous l'effet d'une force, la première région (19) étant disposée le long de l'axe vertical (Z') au-dessus de la deuxième région (20), le revêtement de siège (18) étant relié du côté du bord de bas en haut audit au moins un élément cadre (2, 2a, 2b), la deuxième région (20) formant une déformation tridimensionnelle (21) sous l'action d'une force, le revêtement de siège (18) étant un tricot.

9. Ensemble formant siège (1) selon l'une des revendications précédentes,
**caractérisé par le fait que**
la section inférieure (7) et la section supérieure (8) dudit au moins un élément cadre (2, 2a, 2b) forment ledit au moins un élément cadre (2, 2a, 2b) d'un seul tenant, en une seule pièce ou en plusieurs pièces.

10. Ensemble formant siège (1) selon l'une des revendications 1 à 9,
**caractérisé par le fait que**
l'ensemble formant siège (1) comporte seulement un élément cadre (2), lequel est disposé sur le dispositif de fixation (5), le dispositif de fixation (5) comportant deux éléments bras (25, 25a, 25b), lesquels débouchent dans un élément de base (26), un dispositif de réception (23, 23a, 23b) pour l'axe de palier (22) étant disposé sur chaque élément bras (25, 25a, 25b).

11. Ensemble formant siège (1) selon l'une des revendications 1 à 9,
**caractérisé par le fait que**
l'ensemble formant siège (1) comporte deux éléments cadres (2, 2a, 2b), lesquels sont disposés sur le dispositif de fixation (5), les deux éléments cadres (2, 2a, 2b) étant disposés l'un à côté de l'autre le long de l'axe de largeur (Y), les deux éléments cadres (2, 2a, 2b) étant aptes à pivoter indépendamment l'un de l'autre par rapport au dispositif de fixation (5) autour d'un axe de pivotement commun (6) s'étendant le long d'un axe de largeur (Y).

12. Ensemble formant siège (1) selon la revendication 11,
**caractérisé par le fait que**
l'axe de palier (22) s'étend au moins sur toute l'étendue en largeur des deux éléments cadres (2, 2a, 2b), l'axe de palier (22) étant reçu dans au moins deux dispositifs de réception (23, 23a, 23b) du dispositif de fixation (5), un premier dispositif de réception (23, 23a) étant disposé entre les deux éléments cadres (2a, 2b), au moins un élément bras (25, 25a) étant prévu, sur lequel est disposé le premier élément de réception (23, 23a).

13. Equipement intérieur (100) d'un moyen de transport (101), en particulier d'un moyen de transport de personnes, comportant au moins un ensemble formant siège (1) selon l'une des revendications précédentes.

14. Equipement intérieur (100) selon la revendication 13,
**caractérisé par le fait que**
ledit au moins un ensemble formant siège (1) est disposé sur le moyen de transport (101) de manière fixe ou déplaçable au moyen d'un dispositif de guidage (103).
